# EUROPÄISCHE PATENTSCHRIFT

(11) **EP 1 938 003 B1**
(45) Veröffentlichungstag und Bekanntmachung des Hinweises auf die Patenterteilung: **07.04.2010**
(21) Anmeldenummer: 06806255.3
(22) Anmeldetag: 13.10.2006
(51) Int. Cl.: F16H 61/12

(54) **STEUERUNGSVENTILANORDNUNG ZUR STEUERUNG EINER ANFAHRKUPPLUNG EINES AUTOMATGETRIEBES**
CONTROL VALVE ARRANGEMENT FOR CONTROLLING A STARTING CLUTCH OF AN AUTOMATIC TRANSMISSION
DISPOSITIF DE SOUPAPES DE COMMANDE POUR LA COMMANDE D'UN EMBRAYAGE DE DEMARRAGE D'UNE BOITE DE VITESSES AUTOMATIQUE

(30) Priorität: 21.10.2005 DE 102005050489
(43) Veröffentlichungstag der Anmeldung: 02.07.2008
(73) Patentinhaber: ZF Friedrichshafen AG, 88038 Friedrichshafen (DE)
(72) Erfinder: FRITZER, Anton, 88677 Markdorf (DE); GIERER, Georg, 88079 Kressbronn (DE); HERRMANN, Markus, 88175 Scheidegg (DE); SCHMIDT, Thilo, 88074 Meckenbeuren (DE)
(86) Internationale Anmeldenummer: PCT/EP2006/009903
(87) Internationale Veröffentlichungsnummer: WO 2007/045400

(56) Entgegenhaltungen:
- EP-A- 1 267 102
- EP-A- 1 522 754
- DE-A1- 10 338 355
- DE-B3-102004 018 962
- GB-A- 2 284 026
- US-A- 4 981 052

## Beschreibung

Die Erfindung betrifft eine Steuerungsventilanordnung zur Steuerung einer Anfahrkupplung eines Automatgetriebes eines Kraftfahrzeuges gemäß dem Oberbegriff des Patentanspruchs 1, wie aus der EP 152 275 4 bekannt.

In Automatgetrieben mit automatisierter nasser Anfahrkupplung wird üblicherweise zur Aktivierung eines mechanischen Getriebenotlaufs, etwa nach Ausfall eines Getriebesteuergerätes, der Kraftschluss im Getriebe dadurch beendet, dass diese Anfahrkupplung stromlos in den geöffneten Zustand überführt wird. Diese Strategie kann insbesondere bei Fahrzuständen im fließenden Verkehr zu kritischen Zuständen führen, da dadurch nur noch ein vortriebsloses Ausrollen des Fahrzeugs möglich ist.

Ein Schließen der nassen Anfahrkupplung in einer solchen Fahrbetriebssituation ist ebenfalls aus sicherheitstechnischen Gründen nicht möglich, da der Kraftschluss nur über einen hydraulischen Kupplungsbetätigungsdruck erhalten bleibt. Sofern der Fahrzeugantriebsmotor beim Absinken der Fahrzeuggeschwindigkeit bei geschlossener Kupplung abgewürgt wird, bleibt noch eine Restfahrgeschwindigkeit übrig, in der wichtige vom Motor an sich anzutreibende Nebenaggregate wie Bremskraftverstärker oder Lenkhilfepumpe dann nicht mehr ausreichend angetrieben werden können.

In Automatgetrieben mit trockener Anfahrkupplung wird bei einer Aktivierung des mechanischen Notlaufs diese Kupplung geschlossen, so dass der Abtrieb des Fahrzeugs bis zum Fahrzeugstillstand mit dem Motor antriebstechnisch verbunden bleibt. Hierbei entstehen zwar keine kritischen Fahrzustände, das Fahrzeug kann aber nach dem Fahrzeugstillstand nicht mehr bewegt bzw. weggeschoben werden.

Demnach besteht ein Bedarf an einer Steuerungseinrichtung für eine Anfahrkupplung eines Automatgetriebes eines Kraftfahrzeuges, welche in Abhängigkeit eines von der Motordrehzahl und/oder der Abtriebsdrehzahl des Getriebes den Kraftschluss im Antriebsstrang erst dann unterbricht, wenn eine bestimmte Motordrehzahl bzw. Getriebeabtriebsdrehzahl unterschritten wird, so dass kein Abwürgen des Fahrzeugantriebsmotors erfolgt, die Nebenaggregate angetrieben bleiben und dem Fahrer noch die Möglichkeit gegeben ist, eine gegebenenfalls vorhandene Gefahrenzone sicher zu verlassen. Zudem wird durch ein solches Steuerungsverhalten auch das Bewegen des Fahrzeugs im Stillstand möglich, da der Kraftfluss zwischen Motor und Getriebe unterbrochen ist.

Vor diesem Hintergrund ist aus der DE 199 43 939 A1 eine hydraulische Notsteuerung für ein Umschlingungsgetriebe bekannt, bei der eine dem Getriebe zugeordnete Kupplung in Abhängigkeit einer Drehzahl eines Fahrzeugantriebsmotors geöffnet oder geschlossen werden kann. Dadurch kann bei einer Störung ein erneutes Abwürgen des Antriebsmotors bei Unterschreiten einer bestimmten Grenzdrehzahl vermieden sowie ein Anfahren bei Überschreitung einer bestimmten Drehzahl ermöglicht werden. Je nach Ausbildung der Notsteuerung kann das drehzahlabhängige Steuersignal dabei beispielsweise als hydraulischer Druck, als pneumatischer Druck oder als elektrische Spannung erzeugbar und nutzbar sein.

Zudem ist aus der DE 102 38 104 A1 ein Verfahren zum Ansteuern eines Notschaltprogramms für ein Automatgetriebe mit einer Anfahrkupplung bekannt, welches zur Realisierung eines Notlaufs auch beim Stillstand des Fahrzeugs sowie zur Verhinderung des Absinkens der Motordrehzahl unter eine Abwürgschwelle besonders ausgebildet ist. Bei diesem Verfahren ist vorgesehen, dass das Notschaltprogramm über ein von der Fahrzeuggeschwindigkeit und/oder der Motordrehzahl abhängiges Signal angesteuert wird, welches über eine Ventillogik verarbeitbar ist und bewirkt, dass im Schubbetrieb der Kraftschluss zum Motor rechtzeitig unterbrochen wird, um den Fahrzeugmotor nicht abzuwürgen.

Des Weiteren ist aus der DE 103 38 355 A1 ein Doppelkupplungsgetriebes bekannt, das eine erste und eine zweite Kupplung aufweist, wobei für einen Normalbetrieb zum Schließen/Öffnen der ersten Kupplung eine erste und zum Schließen/Öffnen der zweiten Kupplung eine zweite durch eine Elektronik steuerbare Hydraulik vorhanden ist. Ferner ist eine Zustandshaltehydraulik vorgesehen, der über eine erste und eine zweite hydraulische Leitung Zustandssignale entsprechend dem momentanen Schaltzustand der ersten und der zweiten Kupplung zugeführt werden, und die über hydraulische Steuerleitungen mit der ersten und der zweiten Hydraulik verbunden ist. Bei einem Ausfall der Elektronik steuert die Zustandshaltehydraulik die erste und die zweite Hydraulik so an, dass zumindest in manchen Schaltzuständen der beiden Kupplungen der unmittelbar vor dem Ausfall der Elektronik vorliegende Schaltzustand der Kupplungen aufrechterhalten bleibt.

Schließlich ist es aus der am Anmeldetag dieser Patentanmeldung nicht vorveröffentlichen DE 102 004 020 569.8 eine Steuerungsventilanordnung zur Steuerung einer Anfahrkupplung eines Automatgetriebes bekannt, mit der einfach, herstellkostengünstig und zuverlässig in einer Notsteuerungssituation die Anfahrkupplung dann geöffnet werden kann, wenn die Motordrehzahl und/oder die Abtriebsdrehzahl des Getriebes bzw. die Fahrgeschwindigkeit des Fahrzeugs unter einen vorbestimmten Wert fällt.

Diese Steuerungsventilanordnung weist ein Kupplungsregelventil zur Ansteuerung wenigstens einer Kupplungsbetätigungsvorrichtung auf, welches im Normalbetrieb des Getriebes einen zugeleiteten Versorgungsdruck in Abhängigkeit von einem Vorsteuerdruck oder einem elektrischen Vorsteuersignal in einen Kupplungsbetätigungsdruck zur Ansteuerung der Kupplungsbetätigungsvorrichtung umwandelt. Die Steuerungsventilanordnung ist zudem dadurch gekennzeichnet, dass zur Realisierung eines Notbetriebes des Getriebes bei Wegfall des Vorsteuerdrucks bzw. des elektrischen Vorsteuersignals motordrehzahl- und/oder getriebeabtriebsdrehzahlabhängig ein Aktivierungsdruck auf das Kupplungsregelventil oder direkt auf die Kupplungsbetätigungsvorrichtung leitbar ist, wodurch diese so lange in Schließstellung gehalten wird, wie die genannte Drehzahl oberhalb eines vorbestimmten Drehzahlgrenzwertes liegt.

Durch diese Ventilanordnung wird eine kostengünstig herstellbare und zuverlässig betreibbare Steuerungsvorrichtung für den Notfahrbetrieb eines Fahrzeugs mit einem Automatgetriebe geschaffen, welche dann aktiviert wird, wenn beispielsweise ein elektronisches Getriebesteuerungsgerät und/oder ein elektrisch betätigbares Kupplungsregelventil ausfällt. Dabei sorgt der von der Drehzahl des Fahrzeugantriebsmotors und/oder von der Getriebeausgangsdrehzahl abhängige Steuerungsdruck dafür, dass eine Anfahrkupplung des Automatgetriebes zur Drehmomentübertragung durch das Getriebe geschlossen bleibt, solange die Fahrgeschwindigkeit und damit die Drehzahl des Antriebsmotors nicht unter eine solche Abwürgdrehzahl fällt, bei der der Antriebsmotor seinen verbrennungsmotorischen Betrieb einstellen würde.

Sofern die Fahrgeschwindigkeit bei einem solchen Notfahrbetrieb tatsächlich soweit reduziert ist, dass bei geschlossener Anfahrkupplung mit dem Abwürgen des Motors zu rechnen ist, öffnet die bekannte Steuerungsventilanordnung mittels des drehzahlgekoppelten Steuerdrucks die bis dahin drehmomentübertragende Anfahrkupplung. Ein Abwürgen des Motors wird dadurch vorteilhaft vermieden, so dass von diesem wichtige Fahrzeugnebenaggregate, wie beispielsweise ein Bremskraftverstärker und eine Lenkhilfepupe problemlos weiterbetrieben werden können.

Wenngleich diese bekannte Steuerungsventilanordnung sehr gut funktioniert, so hat sich doch herausgestellt, dass diese in bestimmten Betriebssituationen unvorteilhaft arbeitet und daher verbesserungswürdig ist. So ist eine Betriebssituation eines Kraftfahrzeugs möglich, bei der dieses zuerst in einem Vorwärtsgang oder einem Rückwärtsgang mit einer Motordrehzahl bewegt wurde, die oberhalb des genannten Drehzahlgrenzwertes lag. Bei dieser Betriebsart wurde ein Selbsthalteventil der zu verbessernden Steuerungsventilanordnung durch den drehzahlabhängig eingestellten Druck wie beschrieben aktiviert.

Wenn nun das Fahrzeug ausgehend von diesem Fahrbetrieb gestoppt und die Motordrehzahl weiter über den genannten Drehzahlgrenzwert gehalten wird, so bleibt das Selbsthalteventil weiter in einer Stellung, die bei Wegfall des Vorsteuerdrucks einen Notbetrieb mit dann zu schließender Anfahrkupplung ermöglicht. Dieses Systemverhalten bleibt allerdings auch bestehen, wenn die Anfahrkupplung durch eine entsprechende Wählhebelbetätigung von der Vorwärtsfahrt-Wählhebelstellung D oder von der Rückwärtsfahrt-Wählhebelstellung R kommend zur Getriebewählhebelstellung Neutral oder Parkstellung P geöffnet wird und im Getriebe der letzte genutzte Getriebegang eingelegt bleibt.

Sofern in einer solchen Situation der Vorsteuerdruck wegfällt, schließt die bekannte Steuerungsventilanordnung die Anfahrkupplung und das Fahrzeug fährt wegen der vergleichsweise hohen Motordrehzahl ruckartig an, obwohl der Fahrer des Fahrzeugs wegen der Wählhebelstellung auf Neutral darauf nicht eingestellt ist. Dieses Verhalten der bekannten Steuerungsventilanordnung ist aus sicherheitstechnischen Erwägungen zu vermeiden.

Der Erfindung liegt daher die Aufgabe zugrunde, eine Steuerungsventilanordnung der gattungsgemäßen Art vorzustellen, mit der ein unbeabsichtigtes Auslösen einer Notbetriebsfunktion vermieden werden kann.

Die Lösung dieser Aufgabe ergibt sich durch die Merkmale des Hauptanspruchs, während vorteilhafte Weiterbildungen und Ausgestaltungen der Erfindung den Unteransprüchen entnehmbar sind.

Demnach geht die Erfindung aus von einer Steuerungsventilanordnung zur Betätigungssteuerung zumindest einer Anfahrkupplung eines Automatgetriebes eines Kraftfahrzeuges, mit jeweils einem Kupplungsregelventil, über das ein Versorgungsdruck in einen Druckraum der jeweiligen Kupplungsbetätigungsvorrichtung leitbar ist, mit einem einen geregelten Vorsteuerdruck erzeugenden Druckregelventil, welches von einer Steuerungselektronik ansteuerbar ist und zumindest ein Steuerungsventil der Steuerungsventilanordnung mit dem Vorsteuerdruck versorgt, und mit einer Selbsthaltehydraulik, mit deren Hilfe bei einem Ausfall der Steuerungselektronik und somit einem Wegfall des Vorsteuerdrucks der vor dem Ausfall der Steuerungselektronik zuletzt vorliegende Schaltzustand der wenigstens einen Kupplungsbetätigungsvorrichtung zumindest in manchen Betriebssituationen im Sinne einer Notbetriebsfunktion aufrechterhalten wird.

Zur Lösung des beschriebenen technischen Problems ist bei dieser Steuerungsventilanordnung gemäß der Erfindung zunächst vorgesehen, dass die Selbsthaltehydraulik zur Realisierung der Notbetriebsfunktion ein Selbsthalteventil und ein Aktivierungsventil aufweist, dass das Selbsthalteventil so ausgebildet ist, dass es zur Weiterleitung eines Aktivierungsdrucks in Abhängigkeit von einem motordrehzahlabhängigen Steuerdruck zu dem Aktivierungsventil geeignet ist, und dass das Aktivierungsventil zur Weiterleitung des Aktivierungsdrucks an das zumindest ein Kupplungsregelventil in der Lage ist. Dar-über hinaus ist die Steuerungsventilahordnung mit Mitteln ausgestattet, mit denen in bestimmten Betriebssituationen ein Aktivieren der Notbetriebsfunktion trotz Wegfall des Vorsteuerdrucks und dem Vorliegen eines zum Realisieren der Notbetriebsfunktion ausreichend hohen motordrehzahlabhängigen Steuerdrucks verhinderbar ist.

Diese Steuerungsventilanordnung gemäß der Erfindung aktiviert daher bei einem Ausfall eines zugeordneten elektronischen Steuerungsgerätes fahrzeugbetriebssituationsgerecht eine Notbetriebsart des Fahrzeugs oder verhindert eine solche Aktivierung.

Eine bestimmte Betriebssituation, bei der gemäß der Erfindung trotz eines Ausfalls des elektronischen Steuerungsgeräts bzw. des Wegfalls des Vorsteuerdrucks für die Ventile und einer Antriebsmotordrehzahl, die oberhalb eines festgelegten Grenzwertes liegt, die wenigstens eine Anfahrkupplung nicht geschlossen wird, liegt dann vor, wenn das Kraftfahrzeug zunächst eine normalen Vorwärts- oder Rückwärtsfahrt in der Fahrstufe D oder R mit geschlossener oder schlupfender Anfahrkupplung fuhr, dass Kraftfahrzeug dann gestoppt und durch eine Getriebewählhebelbetätigung zur Wählhebelposition Neutral oder Parkstellung P die Anfahrkupplung bei eingelegtem Gang im Automatgetriebe geöffnet wurde. Auf diese Weise wird verhindert, dass bei noch eingelegten Getriebegang und geöffneter Anfahrkupplung diese den Fahrer überraschend automatisch geschlossen wird.

Gemäß einer bevorzugten Weiterbildung der Erfindung ist die Steuerungsventilanordnung derart ausgebildet, dass beim Vorliegen der bestimmten Betriebssituation zur Verhinderung des Aktivierens der Notbetriebsfunktion eine hydraulische Verbindung für den Aktivierungsdruck zwischen dem Selbsthalterventil und dem Aktivierungsventil unterbrochen ist.

In einer baulich konkreten Ausführungsform kann vorgesehen sein, dass das in einem so genannten Schieberkasten eines elektrohydraulischen Getriebesteuerungsgerätes ausgebildete Aktivierungsventil mit einem Löschdruck beaufschlagbar ist, der von dem Aktivierungsventil bei Wegfall des Vorsteuerdrucks dem Selbsthalteventil derart zuführbar ist, dass dieses Selbsthalteventil die Weiterleitung des Aktivierungsdrucks zu dem Aktivierungsventil unterbricht.

Der Löschdruck wird dabei von einem elektromechanisch betätigbaren Ventil bereitgestellt, welches von dem elektronischen Steuerungsgerät ansteuerbar ist. Sofern das elektronische Steuerungsgerät ausgefallen ist und die genannte kritische Betriebssituation nicht vorliegt, kann die Aktivierung der Notbetriebsfunktion gewünscht sein, bei der die Anfahrkupplung geschlossen wird oder geschlossen bleibt. Da bei einem Ausfall des elektronischen Steuerungsgeräts auch das genannte, den Löschdruck erzeugende elektromechanisch betätigbare Ventil von demselben nicht mehr angesteuert wird, liegt auch kein Löschdruck an dem Aktivierungsventil an. Bei einem ausreichend hohen motordrehzahlabhängigen Steuerdruck kann daher, gesteuert durch das Selbsthalteventil und das Aktivierungsventil, Druckmittel über das Kupplungsregelventil zu der Kupplungsbetätigungsvorrichtung gelangen und die Anfahrkupplung schließen.

In vorteilhafter Ausgestaltung kann vorgesehen sein, dass der Löschdruck einem Druckraum des Selbsthalteventils zuleitbar ist, der von einem Steuerkolben axialverschiebbar begrenzt ist, mit dem die Weiterleitung des Aktivierungsdrucks zwischen dem Selbsthalteventil und dem Aktivierungsventil unterbrechbar ist. Der genannte Druckraum ist dabei bevorzugt derjenige, in dem eine auf diesen Steuerkolben wirkende Rückstellfeder des Selbsthalteventils angeordnet ist.

Gemäß einer anderen Variante der Erfindung gehört zu der Steuerungsventilanordnung ein Abschaltventil, mit dessen Hilfe das unter drehzahlabhängigen Steuerdruck stehende Druckmittel dann in einen Druckmitteltank ableitbar ist, wenn der Löschdruck auf das Abschaltventil wirkt.

In einer konkreten Ausführungsform dieser zweiten Variante der Erfindung ist vorgesehen, dass der Löschdruck in den rückstellfederfernen Druckraum des Abschaltventils leitbar ist, wo dieser Löschdruck auf einen Steuerkolben des Steuerschiebers des Abschaltventils wirken kann. Zudem ist vorgesehen, dass der drehzahlabhängige Steuerdruck über eine Leitung vom Selbsthalteventil zu einem anderen Druckraum des Abschalteventils geführt ist. Schließlich weist der Steuerschieber des Abschalteventils einen Steuerkolben auf, der bei Einwirkung des Löschdrucks auf diesen Steuerschieber eine Verbindung zwischen einem entleerbarer Druckraum des Abschalteventils und dem von dem drehzahlabhängigen Druck beaufschlagten Druckraum des Abschalteventils freigibt.

Des Weiteren kann in einer anderen Variante vorgesehen sein, dass das Abschaltventil einen Druckraum aufweist, in dem eine auf den Steuerschieber wirkende Rückstellfeder angeordnet ist, dass dieser Druckraum über eine Leitung mit dem Druckmitteltank verbunden ist, dass in dieser Leitung ein in Richtung zu dem Abschaltventil absperrendes Rückschlagventil angeordnet ist, und dass in einer das Rückschlagventil strömungstechnisch überbrückenden Leitung eine hydraulische Drossel angeordnet ist.

Dieser Aufbau mit einer so genannten Rückschlagblende ermöglicht es, die Rückstelldauer des Steuerschiebers des Abschaltventils in seine federbelastete Ausgangslage zu verlängern und den Zeitraum, in dem der Löschdruck an dem Abschaltventil anliegen muss, auf ein Minimum zu verkürzen. Zum Deaktivieren der Notbetriebsfunktion bzw. der hydraulischen Notbetätigung der Anfahrkupplung reicht somit ein nur kurzer Druckimpuls auf den Löschdruck-Eingang des Abschaltventils.

Gemäß einem weiteren Merkmal einer gemäß der Erfindung ausgebildeten Steuerventilanordnung ist vorgesehen, dass der rückstellfederferne Druckraum des Selbsthalteventils mit einem Vorsteuerdruck beaufschlagbar ist, mit dem der Steuerschieber des Selbsthalteventils nach einer Deaktivierung seiner Selbsthaltefunktion soweit gegen die Rückstellkraft der Rückstellfeder des Selbsthalteventils auslenkbar ist, bis der drehzahlabhängige Steuerdruck axial auf einen Steuerkolben dieses Steuerschiebers wirken kann.

Des Weiteren ist bevorzugt vorgesehen, dass der rückstellfederferne Druckraum des wenigstens einen Kupplungsregelventils mit einem anderen oder dem gleichen Vorsteuerdruck beaufschlagbar ist. Mit Hilfe dieses Vorsteuerdrucks ist ein Steuerschieber des Kupplungsregelventils nach einer Deaktivierung der Selbsthaltefunktion des Selbsthalteventils so weit gegen die Rückstellkraft einer auf diesen Steuerschieber wirkenden Rückstellfeder auslenkbar, dass ein zu dem Kupplungsregelventil geführter Versorgungsdruck als Kupplungsbetätigungsdruck zur zumindest einen Kupplungsbetätigungsvorrichtung weiterleitbar ist.

Gemäß einer anderen Variante der Steuerventilanordnung kann vorgesehen sein, dass der Löschdruck zu dem rückstellfederfernen Druckraum des Abschaltventils führbar ist, und dass ein Vorsteuerdruck P_V2 über eine Leitung einem mittleren Druckraum des Abschalteventils und von dort, absperrbar durch den Steuerschieber des Abschaltventils, über eine Leitung dem rückstellfederseitigen Druckraum des Selbsthalteventils zuführbar ist.
Des Weiteren kann die Steuerventilanordnung gemäß der Erfindung so ausgebildet sein, dass zu dem rückstellfederfernen Druckraum des Abschaltventils der bereits genannte Vorsteuerdruck P-VST3 leitbar ist, und dass der Vorsteuerdruck P_V2 über eine Leitung dem genannten mittleren Druckraum des Abschalteventils und von dort, absperrbar durch den Steuerschieber des Abschaltventils, über eine Leitung zu dem rückstelltederseitigen Druckraum des Selbsthalteventils zuführbar ist.

Gemäß einer letzten Variante der Steuerventilanordnung nach der Erfindung ist vorgesehen, dass der Löschdruck über eine Leitung dem rückstellfederseitigem Druckraum des Selbsthalteventils und über eine andere Leitung einem Druckraum des Aktivierungsventils zuführbar ist, wobei letzterer Druckraum im Bereich der rückstellfederfernen Stirnseite des mittleren Steuerkolbens eines dreikolbigen Steuerschiebers des Aktivierungsventils ausgebildet ist, dass der Aktivierungsdruck von dem zugeordneten Druckraum des Selbsthalteventils über eine Leitung zu einem Druckraum des Aktivierungsventils leitbar ist, dass benachbart zu diesem letztgenannten Druckraum ein weiterer Druckraum am Aktivierungsventil ausgebildet ist, der mit einer zu dem federfernen Druckraum des Kupplungsregelventils führenden Aktivierungsdruckleitung verbunden ist, und dass mit dem mittleren Steuerkolben des Steuerschiebers des Aktivierungsventils eine Verbindung zwischen den beiden benachbarten Druckräumen am Aktivierungsventil absperrbar ist.

Es sei hier darauf hingewiesen, dass die Steuerungsventilanordnung hinsichtlich der Weiterleitung des Aktivierungsdrucks zu dem wenigstens einem Kupplungsregelventil mit gleicher Wirkung unterschiedlich ausgebildet sein kann. Entgegen der vorbeschriebenen Varianten kann daher auch vorgesehen sein, dass der Aktivierungsdruck zuerst auf das Aktivierungsventil, von dort zum Selbsthalteventil und von diesem zu dem zumindest einen Kupplungsregelventil geführt ist.
Schließlich ist festzustellen, dass die Steuerungsventilanordnung gemäß der Erfindung nicht nur für Antriebsstränge eines Fahrzeugs mit nur einer Anfahrkupplung sinnvoll nutzbar ist, sondern auch für Doppelkupplungstriebe mit Vorteil einsetzbar ist. Bei Doppelkupplungsgetrieben ist jedoch darauf zu achten, dass zur Realisierung des beschrieben Notbetriebs nur eine der beiden Anfahrkupplungen geschlossen sein oder geschlossen werden darf.

Die Erfindung wird nachfolgend anhand einer Zeichnung weiter erläutert, die drei Ausführungsbeispiele von erfindungsgemäß ausgebildeten Steuerungsventilanordnungen zeigt. Im Einzelnen zeigt
- Fig. 1: eine Steuerungsventilanordnung mit einer Selbsthaltehydraulik und Mitteln zur Deaktivierung einer Selbsthaltefunktion,
- Fig. 2: eine Steuerungsventilanordnung wie in Fig. 1, jedoch mit einem Abschaltventil zur Abschaltung der Selbsthaltefunktion,
- Fig. 3: eine Steuerungsventilanordnung wie in Fig. 2, jedoch mit einer Kugelrückschlagblende am Abschaltventil,
- Fig. 4: eine weitere Variante der Steuerungsventilanordnung ähnlich der in Fig. 2 dargestellten,
- Fig. 5: eine andere Steuerungsventilanordnung etwa wie in Fig. 4,
- Fig. 6: ein Diagram über unterschiedliche Betriebsfunktionen der Steuerungsventilanordnung gemäß Fig. 5 und
- Fig. 7: eine letzte Variante der Steuerungsventilanordnung gemäß der Erfindung.

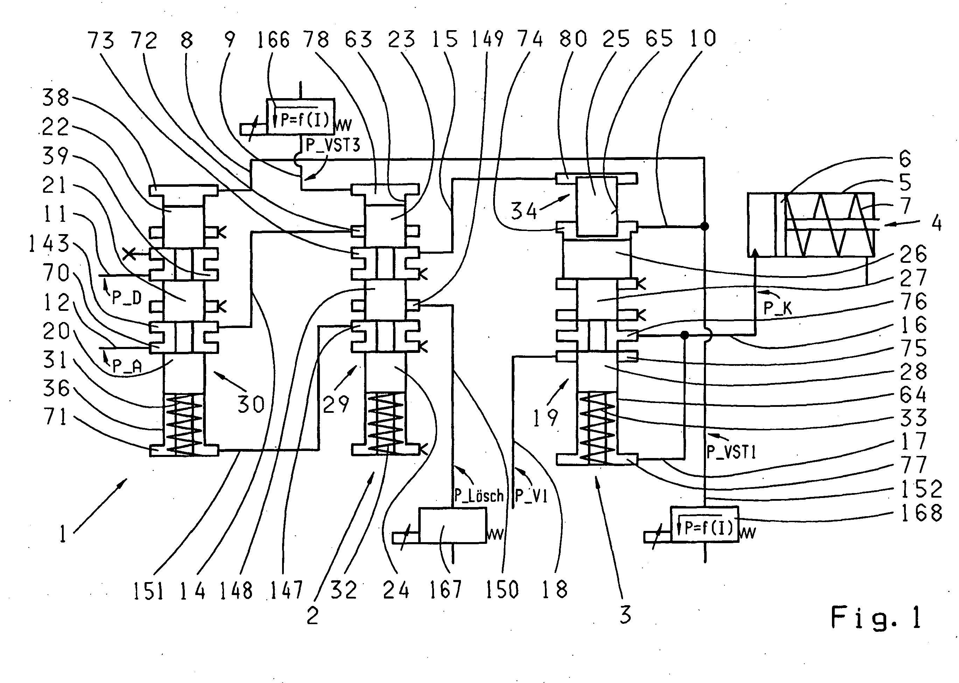

Die in Fig. 1 dargestellte Steuerungsventilanordnung umfasst ein Selbsthalteventil 1, ein Notbetrieb-Aktivierungsventil 2 (im Folgenden Aktivierungsventil genannt), ein Kupplungsregelventil 3 sowie eine Kupplungsbetätigungsvorrichtung 4. Die Kupplungsbetätigungsvorrichtung 4 weist einen Zylinder 5 auf, in dem ein Kolben 6 im Bereich seiner Kolbenstange von einer gegen einen Kupplungsbetätigungsdruck P_K wirkenden Rückstellfeder 7 koaxial umschlungen und bei einer Druckbeaufschlagung seiner federfernen Stirnseite derart in eine Schließrichtung verschiebbar ist, dass eine Anfahrkupplung eines Automatgetriebes zur Drehmomentübertragung geschlossen wird.

Die hier nicht gezeigte, dem Fachmann aber an sich bekannte Anfahrkupplung gehört zu einem Automatgetriebe, welches beispielsweise als Stufen-automat auf der Basis eines Planetengetriebes, als stufenlos sein Übersetzungsverhältnis änderndes Getriebe oder als lastschaltendes automatisiertes Schaltgetriebe ausgebildet sein kann. Für den Fall, dass die Steuerungsventilanordnung für ein Doppelkupplungsgetriebe ausgebildet sein soll, werden zwei Kupplungsregelventile sowie zwei Kupplungsbetätigungsvorrichtungen genutzt.

Die genannten Ventile 1, 2 und 3 sind in einem nicht gezeigten Schieberkasten einer elektrohydraulischen Steuerungsvorrichtung für das Getriebe angeordnet, wobei jedes Ventil mindestens einen Steuerschieber aufweist, welcher Druckräume öffnend, verbindend und/oder schließend von Hydraulikdrücken und/oder Federrückstellfederkräften axial bewegbar ist.

Das Selbsthalteventil 1 weist einen Steuerschieber 30 auf, der in einer Ventilbohrung 36 axial verschiebbar angeordnet ist. Der Steuerschieber 30 verfügt über drei zueinander beabstandete Steuerkolben 20, 21 und 22, wobei eine Stirnseite des Steuerkolbens 20 von einer Rückstellfeder 31 mit einer Rückstellkraft beaufschlagt wird, die in einem Druckraum 71 des Selbsthalteventils 1 angeordnet ist.

Auf das axial gegenüberliegende Ende des Steuerschiebers 30 wirkt bei Bedarf ein Vorsteuerdruck P_VST1, der einem Druckraum 38 des Selbsthalteventils 1 über eine Druckleitung 8 zuführbar ist. Der Vorsteuerdruck P_VST1 wird über eine Leitung 10 auch einem Druckraum 74 des Kupplungsregelventils 3 zugeführt, der zur Druckbeaufschlagung von freien Stirnflächen von zwei Steuerschiebern 19, 34 des Kupplungsregelventils 3 dient. Auf deren Funktionsweise wird weiter untern eingegangen.

Der Vorsteuerdruck P_VST1 wird von einem Druckregelventil 168 aus dem von einer nicht dargestellten Ölpumpe erzeugten Hauptdruck des Druckmittels bereitgestellt. Das Druckregelventil 168 ist dazu von einem hier nicht dargestellten elektronischen Steuerungsgerät, vorzugsweise ein Getriebesteuerungsgerät, ansteuerbar.

Ein anderer Vorsteuerdruck P_VST3 wird von einem Druckregelventil 166 aus dem Hauptdruck bereitgestellt, welches ebenfalls von dem elektronischen Steuerungsgerät ansteuerbar ist. Dieser Vorsteuerdruck P_VST3 wird zu einem rückstellfederfernen Druckraum 78 des Aktivierungsventils 2 geleitet, wo dieser auf die Stirnfläche eines Steuerkolbens 23 des Steuerschiebers 29 des Aktivierungsventils 2 wirken kann.

Zudem wird einem Druckraum 39 des Selbsthalteventils 1 zwischen dem Steuerkolben 21 und dem Steuerkolben 22 ein Steuerdruck P_D über eine Leitung 11 zugeführt, dessen Druckhöhe von der Drehzahl des Fahrzeugantriebsmotors abhängt.

Des Weiteren wird dem Selbsthalteventil 1 in einen Druckraum 70 zwischen den Steuerkolben 20 und 21 ein Aktivierungsdruck P_A über eine Leitung 12 zugeführt, welcher im Notbetrieb des Getriebes nach einem Ausfall des elektronischen Steuerungsgerätes dafür sorgt, dass eine drehmomentübertragende Kupplung des Getriebes drehzahlabhängig geschlossen bleibt.

Hinsichtlich des Aufbaus des Aktivierungsventils 2 ist darauf hinzuweisen, dass dessen Steuerschieber 29 drei zueinander beabstandeten Steuerkolben 23, 148 und 24 aufweist sowie in einer Bohrung 63 des genannten Schieberkastens axial verschiebbar angeordnet ist. Dabei ist eine Stirnseite des Steuerkolbens 24 von der Kraft einer Rückstellfeder 32 beaufschlagt.

Dem axial gegenüberliegenden Ende des Steuerschiebers 29 ist in einem Druckraum 78 der bereits erwähnte Vorsteuerdruck P_VST3 über eine Leitung 9 zuführbar. Eine Leitung 14 verbindet zudem den Druckraum 70 bzw. 143 des Selbsthalteventils 1 mit einem Druckraum 72 des Aktivierungsventils 2, wobei dieser Druckraum 72 mittels des rückstellfederfernen Steuerkolbens 23 verschlossen oder mit einem Druckraum 73 am Aktivierungsventil 2 bei Wegfall des Vorsteuerdrucks P_VST3 hydraulisch verbunden werden kann.

Mit dem mittleren Steuerkolben 148 kann ein mit der Leitung 150 verbundener Druckraum 149 des Aktivierungsventils 2 verschlossen oder bei Wegfall des Vorsteuerdrucks P_VST3 mit einem Druckraum 147 am Aktivierungsventil verbunden werden. In der Leitung 150 liegt in bestimmten kritischen Betriebssituationen des Kraftfahrzeuges bzw. des Automatgetriebes ein hydraulischer Löschdruck P_Lösch an, der von einem Schaltventil 167 bereitgestellt wird, welches von dem elektronischen Steuerungsgerät ansteuerbar ist. Der Druckraum 147 ist über eine Leitung 151 mit dem bereits erwähnten Druckraum 71 am Selbsthalteventil 1 verbunden.

Das Kupplungsregelventil 3 umfasst einen axial längeren Steuerschieber 19 mit drei Steuerkolben 26, 27 und 28 sowie einen axial kürzeren Steuerschieber 34, die in Bohrungen 64 und 65 des genannten Schieberkastens axialverschiebbar aufgenommen sind. Dabei ist der axial längere Steuerschieber 19 an einem Ende des Steuerkolbens 28 von einer Rückstellfeder 33 mit einer Rückstellkraft beaufschlagt.

Der axial kürzere Steuerschieber 34 umfasst einen Steuerkolben 25, dessen zu dem andern Steuerschieber 19 gewandtes Ende von dem bereits genannten Vorsteuerdruck P_VST1 beaufschlagbar ist. Dazu ist der Druckraum 74 am Kupplungsregelventil 3 über die Leitung 10 und die Leitung 152 mit dem den Vorsteuerdruck P_VST1 erzeugenden Druckregelventil 168 verbunden. Zu der gegenüberliegenden Stirnseite des Kolbens 25 ist der Aktivierungsdruck P_A über eine Leitung 15 in den Druckraum 80 leitbar, welche mit dem Druckraum 73 an dem Aktivierungsventil 2 verbunden ist.

Der axial längere Steuerschieber 19 des Kupplungsregelventils 3 verfügt über die drei genannten Steuerkolben 26, 27 und 28, wobei die beiden Kolben 26 und 27 axial unmittel benachbart zueinander angeordnet sind. Das freie und dem axial kürzeren Steuerschieber 34 gegenüberliegende Ende des Steuerkolbens 26 ist ebenfalls über den Druckraum 74 mit dem genannten Vorsteuerdruck P_VST1 beaufschlagbar, während das rückstellfederferne Ende des Steuerkolbens 28 einem Druckraum 75 zugeordnet ist, in den ein System- bzw. Versorgungsdruck P_V1 leitbar ist.

Dieser Druckraum 75 ist im Normalbetrieb durch entsprechende Ansteuerung des Kupplungsregelventils 3 über den Vorsteuerdruck P_VST1 mit einem benachbarten Druckraum 76 verbindbar, so dass ein geregelter Kupplungsbetätigungsdruck P_K, eingestellt durch den Steuerkolben 28, in diesem Druckraum 76 wirken kann. Der Druckraum 76 ist zudem über eine Leitung 16 mit dem Zylinder 5 der Kupplungsbetätigungsvorrichtung 4 sowie mit einem Druckraum 77 am Kupplungsregelventil 3 verbunden, welcher auch dessen Rückstellfeder 33 aufnimmt.

Die Funktionsweise der Steuerungsventilanordnung gemäß Fig. 1 ist nun Folgende:

Im normalen Fahrbetrieb ist der Vorsteuerdruck P_VST1 so eingestellt, dass der Steuerschieber 30 am Selbsthalteventil 1 gegen die Kraft der Feder 31 soweit axial verschoben ist, dass der Steuerkolben 20 einen Weg für den Versorgungsdruck P_A von dem Druckraum 70 über den Druckraum 143 und die Leitung 14 zu dem Druckraum 72 des Aktivierungsventils 2 öffnet.

Zudem wirkt der Vorsteuerdruck P_VST3 im normalen Fahrbetrieb in dem Druckraum 78 des Aktivierungsventils 2 derart, dass dessen Steuerschieber 29 gegen die Rückstellkraft der Rückstellfeder 32 soweit axial verschoben in der Bohrung 63 angeordnet ist, dass der Druckraum 73 von dem Druckraum 72 durch den Steuerkolben 23 getrennt ist. Eine Weiterleitung des Aktivierungsdrucks P_A vom Aktivierungsventil 2 über die Leitung 15 zu dem Kupplungsregelventil 3 ist damit unterbunden.

Außerdem wird der axial längere Steuerschieber 19 des Kupplungsregelventils 3 über die Leitung 10 derart mit dem Vorsteuerdruck P_VST1 beaufschlagt, dass eine Steuerkante des Steuerkolbens 28 den Druckraum 75 am Kupplungsregelventil 3 mehr oder weniger weit freigibt. Auf diese Weise kann in Abhängigkeit von der Höhe des Vorsteuerdrucks P_VST1 der Versorgungsdruck P_V1 zu einem Kupplungsbetätigurigsdruck P_K geregelt werden, mit dem die Kupplungsbetätigungsvorrichtung 4 letztlich in eine die zugeordnete Kupplung öffnende oder schließende Stellung gebracht werden kann. Selbstverständlich lassen sich auch Zwischenstellungen einstellen, in denen die Kupplung schlupfend betrieben wird.

Zudem ist in Fig. 1 erkennbar, dass die der Rückstellfeder 33 zugewandte Stirnseite des Steuerkolbens 28 des Kupplungsregelventils 3 über den Druckraum 76 und die Leitungen 16 und 17 ebenfalls mit dem geregelten Kupplungsbetätigungsdruck P_K bzw. mit dem Aktivierungsdruck P_A beaufschlagbar ist.

Sofern beispielsweise durch eine Störung im Getriebesteuerungsgerät oder durch einen Ausfall desselben die Vorsteuerdrücke P_VST1 und P_VST3 wegfallen oder zumindest stark abfallen, wird der drehzahlabhängige Steuerdruck P_D im Druckraum 39 des Selbsthalteventils 1 betätigungswirksam. Wenn die Drehzahl des Fahrzeugantriebsmotors so hoch ist, dass das Abwürgen des Motors nicht zu befürchten ist, wird auch dieser Steuerdruck P_D so hoch sein, dass er in der Lage ist, den Steuerschieber 30 des Selbsthalteventils 1 in einer Position zu halten, in der der Versorgungsdruck P_A über die Druckräume 70 und 143 sowie über die Leitung 14 zu dem Druckraum 72 des Aktivierungsventils 2 geleitet wird.

Diese Selbsthaltefunktion des Selbsthalteventils 1 erlischt, wenn der drehzahlabhängige Steuerdruck P_D unter einen vorgegebenen Wert abfällt. Dieser Druckgrenzwert kennzeichnet die Abwürgdrehzahl des Motors. In diesem Falle wird der Steuerschieber 30 durch die Kraft der Rückstellfeder 31 in Richtung zu dem Druckraum 38 axial verschoben, so dass die genannte Aktivierungsdruckversorgung P_A des Aktivierungsventils 2 unterbrochen ist. Die Anfahrkupplung wird daher geöffnet.

In einer Notbetriebssituation ist der Vorsteuerdruck P_VST3 auch im Druckraum 78 des Aktivierungsventils 2 weggefallen oder stark abgesenkt, so dass dessen Steuerschieber 29 durch die Kraft der Rückstellfeder 32 derart in Richtung zum Druckraum 78 axial verschoben ist, dass der Druckraum 72 und der Druckraum 73 miteinander verbunden sind. Dadurch wird der Aktivierungsdruck P_A über die Leitung 15 auch zu dem Druckraum 80 am Kupplungsregelventil 3 geführt, wo dieser auf den axial kurzen Steuerschieber 34 wirkt. In dessen Folge drückt der Steuerschieber 34 auf die freie Stirnseite des Kolbens 26 des axial längeren Steuerschiebers 19, wodurch dieser gegen die Kraft der Rückstellfeder 33 axial verschoben wird. Dadurch wird trotz fehlendem Vorsteuerdruck P_VST1 die Verbindung zwischen dem Druckraum 75 und dem Druckraum 76 offen gehalten.

Durch diese Wirkungsweise kann auch bei Wegfall des Vorsteuerdrucks P_VST1 bzw. P_VST3 über die Leitung 18, die Druckräume 75, 76 sowie die Leitung 16 ein die Kupplungsbetätigungsvorrichtung 4 in ihrer Schließposition haltender Kupplungsbetätigungsdruck P_K auf dieselbe geleitet werden.

Sofern die Motordrehzahl derart stark abfällt, dass mit dem Abwürgen des Motorbetriebs zu rechnen ist, weist auch der drehzahlabhängige Druck P_D einen dementsprechend niedrigen Druckwert auf. Dies führt schließlich zu einem Abbruch des Notbetriebs des Getriebes, da dann die Kraft der Rückstellfeder 31 am Selbsthalteventil 1 ausreicht, um dessen Steuerschieber 30 soweit axial zu verschieben, dass die Aktivierungsdruckverbindung zwischen dem Druckraum 70 am Selbsthalteventil 1 und der Druckleitung 14 unterbrochen wird.

Als Folge davon wird auch der kurze Steuerschieber 34 am Kupplungsregelventil 3 nicht mehr mit dem Aktivierungsdruck P_A beaufschlagt, weshalb der längere Steuerschieber 19 getrieben durch die Kraft der Rückstellfeder 33 in eine solche Position verschoben wird, in der die Verbindung zwischen den Druckräumen 75 und 76 unterbrochen ist. Dadurch fällt auch der Kupplungsbetätigungsdruck im Zylinder 5 der Kupplungsbetätigungsvorrichtung 4 ab, so dass dessen Kolben 6, getrieben durch die Kraft der Rückstellfeder 7, in seine Geöffnet-Stellung verschoben wird.

Wie Fig. 1 verdeutlicht, kann die Kupplungsbetätigungsvorrichtung 4 bei einem Wiederanstieg des drehzahlabhängigen Steuerdrucks P_D nach einem Notbetrieb zunächst nicht wieder in ihre Schließstellung gebracht werden, so dass der sicherheitstechnische Vorteil erreicht ist, dass beispielsweise in einer Reparaturwerkstatt die Motordrehzahl zu Testzecken hochgedreht werden kann, ohne dass sich durch einen Anstieg des drehzahlabhängigen Drucks P_D dann automatisch ein Kraftschluss im Automatgetriebe einstellen würde.

Mit der beschriebenen Steuerventilanordnung ist gemäß der Erfindung auch eine weitere Betriebsweise möglich, bei der in bestimmten kritischen Betriebssituationen des Fahrzeugs bzw. des Automatgetriebes ein Auslösen der beschriebenen Notbetriebsfunktion, also das motordrehzahlabhängige Schließen oder geschlossen halten der Anfahrkupplung beim Ausfall des elektronischen Steuerungsgeräts, verhindert wird.

So ist eine Betriebssituation eines Kraftfahrzeugs möglich, bei der dieses zuerst in einem Vorwärtsgang oder einem Rückwärtsgang mit einer Motordrehzahl bewegt wurde, die oberhalb des genannten Drehzahlgrenzwertes lag. Bei dieser Betriebsart wurde das Selbsthalteventil 1 der Steuerungsventilanordnung durch den drehzahlabhängig eingestellten Druck P_D wie beschrieben aktiviert, der Steuerschieber 30 also gegen die Kraft der Rückstellfeder 31 also soweit verschoben, dass Druckmittel mit dem Druck P_D in den Druckraum 39 des Selbsthalteventils 1 gelangt.

Wenn nun das Fahrzeug ausgehend von diesem Fahrbetrieb gestoppt und die Motordrehzahl weiter über dem genannten Drehzahlgrenzwert gehalten wird, so bleibt das Selbsthalteventil 1 in der beschrieben Stellung, die bei Wegfall des Vorsteuerdrucks P_VST1, P_VST3 einen Notbetrieb mit dann zu schließender Anfahrkupplung ermöglicht. Dieses Systemverhalten bleibt auch bestehen, wenn die Anfahrkupplung durch eine entsprechende Wählhebelbetätigung zur Getriebewählhebelstellung Neutral oder Parkstellung P geöffnet wird.
Um nun zu vermeiden, dass in einer solchen Situation bei eingelegtem Getriebegang, geöffneter Anfahrkupplung, auf Neutral oder Parkstellung P stehendem Getriebewählhebel und einer Motordrehzahl über dem beschriebenen Grenzwert die Anfahrkupplung dadurch automatisch geschlossen wird, dass das elektronische Steuergerät und somit die Vorsteuerdrücke P_VST1, P_VST3 ausfallen, kann durch rechtzeitiges Einschalten des Löschdrucks ein autonomes Schließen der Anfahrkupplung verhindert werden.

Dazu wird das in Fig. 1 dargestellte elektrohydraulische Ventil 167 derart angesteuert, dass in der zu dem Druckraum 149 des Aktivierungsventils 2 führenden Leitung 150 ein hydraulischer Löschdruck P_Lösch anliegt. Sofern der Vorsteuerdruck P_VST3 in der Leitung 9 vorhanden ist, wirkt dieser über den Druckraum 78 des Aktivierungsventils 2 auf die freie Stirnseite des Steuerkolbens 23 des Steuerschiebers 29 im Aktivierungsventil 2, so dass dieser Steuerschieber 29 gegen die Rückstellkraft der Rückstellfeder 32 gedrückt wird. Dadurch ist der Druckraum 149 bei funktionierendem elektronischem Steuerungsgerät durch den Steuerkolben 148 verschlossen sowie die Verbindung zwischen den Druckräumen 72 und 73 unterbrochen.

Wenn nun die Vorsteuerdrücke P_VST1 und P_VST3 wegfallen, würde wie bereits erläutert, bei einem ausreichend hohen drehzahlabhängig eingestellten Steuerdruck P_D der Steuerschieber 30 des Selbsthalteventils 1 in seiner in Fig. 1 dargestellten Position verbleiben, während der Steuerschieber 29 des Aktivierungsventils 2 getrieben durch die Rückstellfeder 32 in Richtung zum Druckraum 78 bewegt werden würde, so dass die Druckräume 73 und 74 verbunden wären. Dadurch könnte der Aktivierungsdruck P_A zu dem Kupplungsregelventil 3 gelangen und dort den kleineren Steuerschieber 34 derart verschieben, dass durch den großen Steuerschieber 19 Druckmittel mit dem Versorgungsdruck P_V1 zu der Kupplungsstellvorrichtung 4 in der Art gelangen, dass eine Anfahrkupplung geschlossen würde.
Durch die erfindungsgemäße Versorgung des Aktivierungsventils 2 mit dem Löschdruck P_Lösch gelangt bei einem Wegfall des Vorsteuerdrucks P_VST3 aber Druckmittel mit dem Löschdruck P_Lösch von dem Druckraum 149 in den Druckraum 147 und von dort über die Leitung 151 in den Druckraum 71 am Fuße des Selbsthalteventils 1. Hier drückt der Löschdruck P_Lösch sozusagen von unten, die Rückstellfeder 31 unterstützend gegen den Steuerkolben 20, so dass sich der Steuerschieber 30 gegen den drehzahlabhängig eingestellten Druck P_D in Richtung zum Druckraum 38 bewegt. Dadurch wird die Zufuhr von Aktivierungsdruck P_A in den Druckraum 70 durch den Steuerkolben 20 abgesperrt, mit der Konsequenz, dass das Aktivierungsventil 2 sowie das Kupplungsregelventil 3 mit diesem Aktivierungsdruck P_A nicht versorgt werden und die Anfahrkupplung durch die Kraft der Rückstellfeder 7 der Kupplungsbetätigungsvorrichtung 4 geöffnet wird oder geöffnet bleibt.

Der Löschdruck P_Lösch wird dann durch Ansteuerung des elektrohydraulischen Ventils 167 bereitgestellt, wenn das elektronische Steuerungsgerät funktioniert und die oben beschriebene kritische Betriebssituation des Fahrzeugs eintritt. Sollte das elektronische Steuerungsgerät dann ausfallen, so würde die Notbetriebsfunktion der hydraulischen Steuerungsanordnunü nicht aktivierbar sein. Wenn die kritische Betriebssituation nicht mehr vorliegt und das elektronische Steuerungsgerät noch korrekt arbeitet, schaltet dieses zumindest den Löschdruck P_Lösch durch Stromlosschalten des Ventils 167 ab, so dass der Steuerschieber 30 des Selbsthalteventils 1 bei dort anliegendem Vorsteuerdruck P_VST1 soweit gegen die Kraft der Rückstellfeder 31 ausgelenkt wird, dass der drehzahlabhängig eingestellte Druck P_D den Druckraum 39 an der rückstellfederfernen Stirnfläche des Steuerkolbens 21 füllen kann.

Wenngleich die Steuerungsventilanordnung gemäß Fig. 1 an sich sehr vorteilhaft ausgebildet ist, so muss bei dieser zum Auslösen der Löschfunktion, also zur Verhinderung der Aktivierung der Notbetriebsfunktion, die hydraulischen Notlauffunktion durch kurzzeitiges Abschalten des Vorsteuerdrucks P_VST3 aktiviert werden. Dadurch kann ein spürbares, kurzes Schließen der Anfahrkupplung nicht vollständig ausgeschlossen werden. Die nachfolgenden Varianten der Steuerungsventilanordnung gemäß der Erfindung vermeiden diesen möglicherweise auftretenden Nachteil.

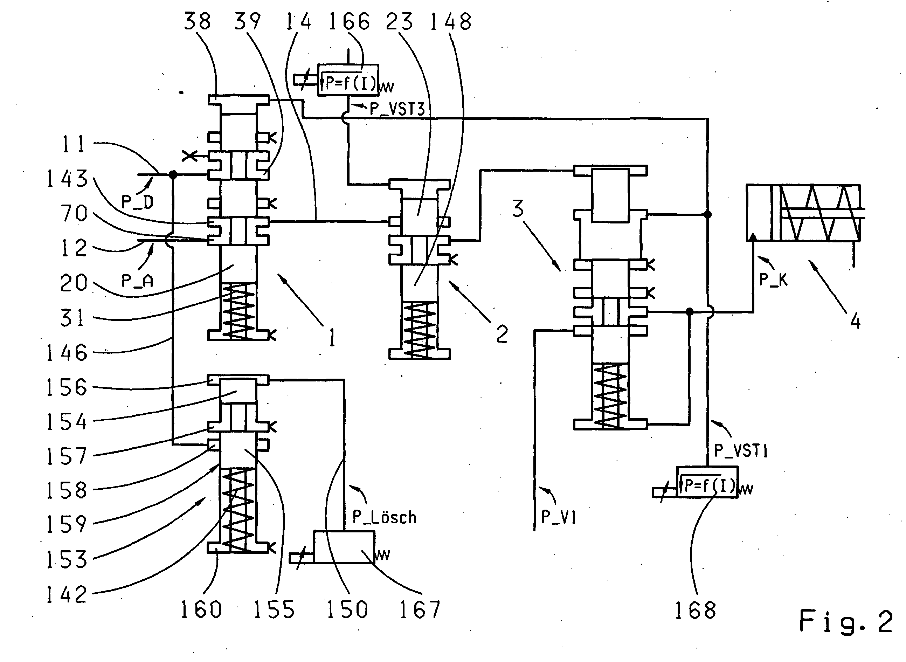

Die in Fig. 2 gezeigte Steuerungsventilanordnung gemäß der Erfindung unterscheidet sich von dem gerade erläuterten Ausführungsbeispiel vor allem dadurch, dass diese ein gesondertes Abschaltventil 153 aufweist und das Aktivierungsventil 2 nur zwei Steuerkolben 23 und 148 hat. Dieses Abschaltventil 153 verfügt über einen Steuerschieber 159 mit zwei beabstandeten Steuerkolben 154 und 155, der von einer Rückstellfeder 166 in eine Ausgangslage drückbar ist. Am rückstellfederfernen Ende des Abschaltventils 153 ist ein Druckraum 156 ausgebildet, der über die Leitung 150 mit dem Löschdruck P_Lösch beaufschlagbar ist. Zwischen den beiden Steuerkolben 154, 155 ist ein in einen Druckmitteltank entleerbarer Druckraum 157 ausgebildet. Dieser Druckraum 157 ist durch axiales Verschieben des Steuerkolbens 155 gegen die Kraft der Rückstellfeder 142 mit einem Druckraum 158 verbindbar, der über eine Leitung 146 mit der den motordrehzahlabhängigen Steuerdruck P_D führenden Leitung 11 im Bereich des Druckraumes 39 des Selbsthalteventils 1 verbunden ist.

Zur Unterbindung der Notbetriebsfunktion der Steuerungsventilanordnung gemäß Fig. 2 in der oben geschilderten kritischen Fahrzeugbetriebssituation wird der Druckraum 156 des Abschaltventils 153 mit dem Löschdruck P_Lösch beaufschlagt, so dass dessen Steuerschieber 159 gegen die Kraft der Rückstellfeder 142 verschoben wird. Dadurch gibt der Steuerkolben 155 mit seiner Steuerkante den Druckraum 158 frei, so dass Druckmittel mit dem drehzahlabhängigen Steuerdruck P_D von der Leitung 11 bzw. dem Druckraum 39 des Selbsthalteventils 1 über die Leitung 146 und den Druckraum 158 in den Druckraum 157 gelangt. Von dort wird das Druckmittel in einen Druckmitteltank 165 geleitet, so dass der Druck im Druckraum 39 des Selbsthalteventils derart absinkt, dass dessen Steuerschieber 30 getrieben durch die Kraft der Rückstellfeder 31 verschoben wird. Der Steuerkolben 20 des Steuerschiebers 30 sperrt dabei den Druckraum 70 von dem Druckraum 143 ab, so dass der Aktivierungsdruck P_A nicht mehr von dem Selbsthalteventil 1 zu dem Aktivierungsventil 2 gelangen kann. Die Selbsthaltefunktion für einen Notbetrieb des Antriebsstrangs bei Ausfall des elektronischen Steuerungsgerätes ist damit zunächst nicht aktivierbar.

Sobald die geschilderte kritische Fahrzeugbetriebssituation vorüber ist, wird der Löschdruck P_Lösch von dem Druckraum 156 des Abschaltventil genommen, so dass der entleerbare Druckraum 157 nicht mehr mit dem unter dem Druck P_D stehendem Druckmittel beaufschlagt wird, dieser jedoch in dem Druckraum 39 des Selbsthalteventils 1 wieder anliegt. Dadurch, dass der Vorsteuerdruck P_VST1 den Druckraum 38 des Selbsthalteventils 1 belaufschlagt, wird der Steuerschieber 30 des Selbsthalteventils 1 erneut gegen die Kraft der Rückstellfeder 31 gedrückt, so dass auch bei einem anschließenden Wegfall des Vorsteuerdrucks V_ST1 Druckmittel unter dem Druck P_A von dem Selbsthalteventil 1 zu dem Aktivierungsventil 2 gelangen kann, wenn der drehzahlabhängige Steuerdruck P_D hoch genug ist.

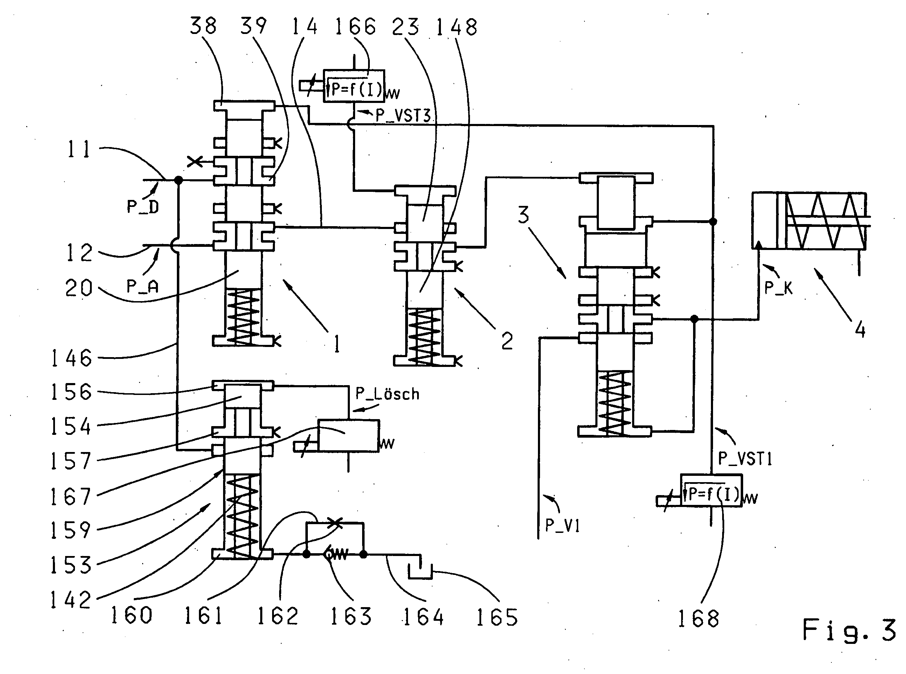

Bei den beiden bisher geschilderten Varianten der Steuerungsventilanordnung ist es notwenig, dass das Ableiten des Druckmittels mit dem drehzahlabhängigen Steuerdruck P_D zu einem Druckmitteltank 165 sowie das Zurückführen des Steuerschiebers 30 des Selbsthalteventils 1 in seine Ausgangslage eine gewisse Zeit benötigt. Zudem muss dazu der Löschdruck P_Lösch ständig anliegen. Um dieses Arbeitsverhalten anders zu gestalten, ist die Steuerungsventilanordnung gemäß Fig. 3 mit einer so genannten Kugelrückschlagblende am Abschalteventil ausgestattet, die die Rücklaufdauer der Rückstellung des Steuerschiebers 30 des Selbsthalteventils 1 verlängert und den Zeitraum, in dem der Löschdruck P_Lösch an dem Abschaltventil 153 anliegen muss so weit verkürzt, dass zum Deaktivieren der Notbetriebseigenschaft des Steuerungsventilanordnung nur noch ein kurzer Druckimpuls P_Lösch notwenig ist.

Wie Fig. 3 veranschaulicht, ist die Steuerungsventilanordnung weitgehend identisch mit derjenigen gemäß Fig. 2. In Ergänzung dazu ist der Druckraum 160, in dem die Rückstellfeder 142 des Abschaltventils 153 angeordnet ist, mit einer Leitung 164 verbunden, die in den Druckmitteltank 165 mündet. In dieser Leitung ist ein in Richtung zum Abschaltventil 153 absperrendes federbelastetes Kugelrückschlagventil 163 integriert, welches von einer Leitung 161 mit einer hydraulischen Blende 162 überbrückt ist.

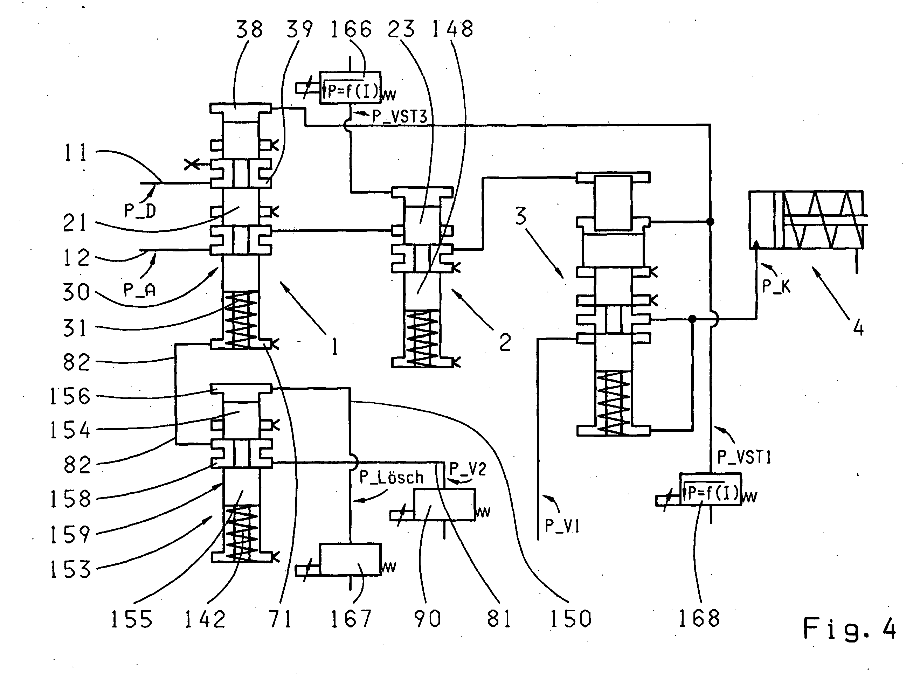

Die Variante der Steuerungsventilanordnung gemäß Fig. 4 entspricht hinsichtlich ihres Aufbaus und ihrer Funktionsweise weitgehend der Variante gemäß Fig. 2, so dass nachfolgend im Wesentlichen die Unterschiede erläutert werden. Während über die Leitung 150 dem Druckraum 156 des Abschaltventils 153 der Löschdruck P_Lösch zuführbar ist, ist dessen Druckraum 158 über die Leitung 81 mit einem Steuerdruck P_V2 beaufschlagbar. Beide Drücke P_Lösch und P_V2 sind beispielsweise der von der Druckmittelpumpe bereitgestellte Hauptdruck des Hydrauliksystems oder ein Reduzierdruck des Hydrauliksystems, die vorzugsweise über elektromagnetisch betätigbare Ventile 90 bzw. 167 zuschaltbar sind. Von dem Druckraum 158 des Abschaltventils 153 ist zudem eine Leitung 82 zu dem Druckraum 71 des Selbsthalteventils 1 geführt.

Im Normalbetrieb des Fahrzeugs drückt die Rückstellfeder 142 den Steuerschieber 159 des Abschaltventils 153 in seine Grundstellung, so dass der Druckraum 158 durch den Steuerkolben 155 verschlossen ist. In der bereits erwähnten kritischen Betriebssituation, liegt der Vorsteuerdruck P_VST1 nicht mehr in der vorgesehenen Höhe im Druckraum 38 des Selbsthalteventils 1 an, der drehzahlabhängige Druck P_D ist aber hoch genug, um den Steuerkolben 21 des Selbsthalteventils 1 gegen die Kraft der Rückstellfeder 31 so weit zu verschieben, dass zur Realisierung einer Notbetriebsfunktion Druckmittel mit dem Aktivierungsdruck P_A zu dem Kupplungsregelventil 3 leitbar ist.

Um nun zu verhindern, dass der hydraulische Notbetrieb aktivierbar ist, wird der Löschdruck P_Lösch dem Druckraum 156 zugeführt. Dadurch wird der Steuerschieber 159 gegen die Kraft der Rückstellfeder 142 verschoben, so dass Druckmittel unter dem Vorsteuerdruck P_V2 durch die Leitung 81, den Druckraum 158 und die Leitung 82 zu dem federseitigen Druckraum 71 des Selbsthalteventils 1 gelangt. Der Vorsteuerdruck P_V2 drückt dann zusammen mit der Kraft der Rückstellfeder 31 den Steuerschieber 30 in seine Grundstellung, so dass trotz eines für einen Notbetrieb ausreichend hohen drehzahlabhängigen Steuerdrucks P_D kein Aktivierungsdruck über das Selbsthalteventil 1 zu dem Aktivierungsventil 2 gelangen kann.

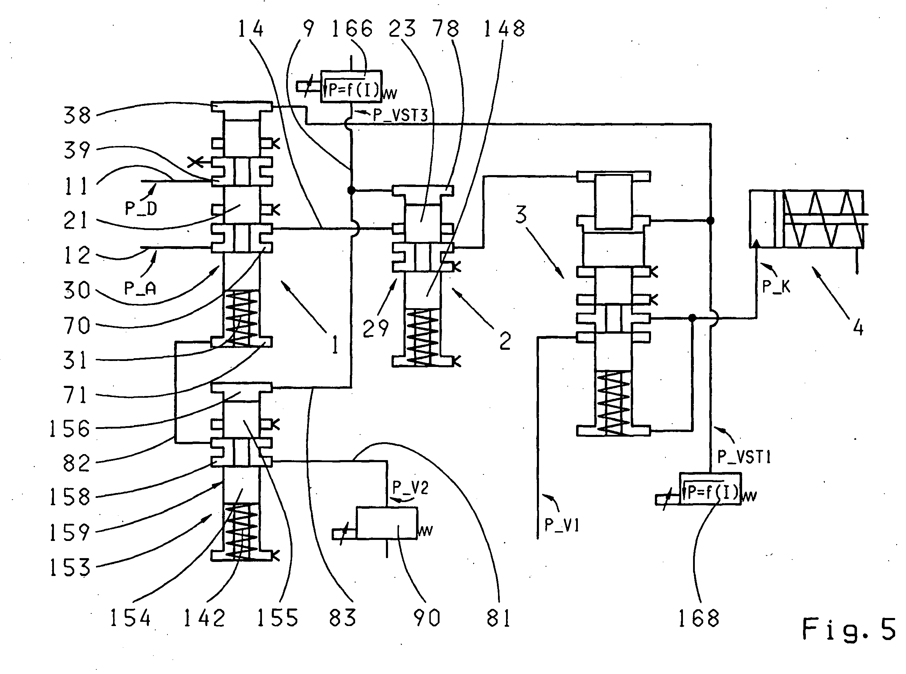

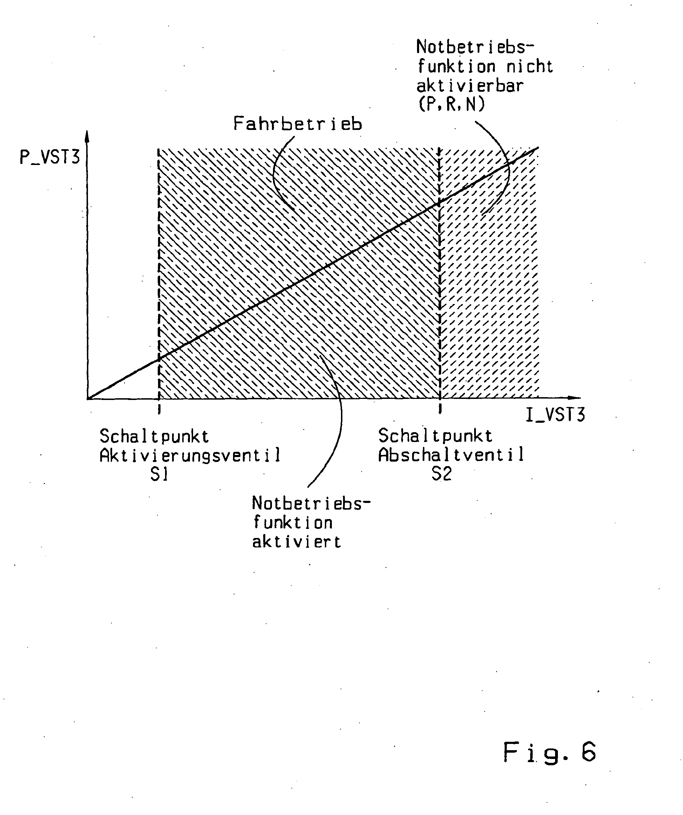

Eine weitere Variante ähnlich der Steuerungsventilanordnung gemäß Fig. 4 ist in Fig. 5 dargestellt. Vorteilhaft wird hier auf die Zuleitung des gesonderten Löschdrucks P-Lösch verzichtet. Vielmehr ist der Vorsteuerdruck P_VST3 nicht nur über die Leitung 9 zu dem Aktivierungsventil 2 geleitet, sondern über die Leitung 83 auch zu dem Druckraum 156 des Abschaltventils 153 geführt. Durch unterschiedliche Schaltpunktauslegung des Abschaltventils 153 und des Aktivierungsventils 2 kann dieser Vorsteuerdruck P_VST3 zur Betätigung beider Ventile 2, 153 verwendet werden, wie anhand der Figuren 5 und 6 nachfolgend erläutert wird.
Im Normalbetrieb des Fahrzeugs wirkt der Vorsteuerdruck P_VST3 sowohl im Druckraum 78 des Aktivierungsventils als auch im Druckraum 156 des Abschaltventils 153. Dadurch sperrt der Steuerkolben 23 des Aktivierungsventils 2 die Weiterleitung des Aktivierungsdrucks P_A an das Kupplungsregelventil 3 ab, so dass die Notbetriebsfunktion deaktiviert ist. Durch unterschiedliche Schaltpunktauslegung des Aktivierungsventils 29 und des Abschaltventils 159 wird der Vorsteuerdruck P_VST3 im Normalbetrieb zwischen den beiden Schaltpunkten S1 und S2 gemäß Fig. 6 eingestellt, so dass der Kolben 155 des Abschaltventils 153 in Grundstellung verweilt und der federseitige Druckraum 71 des Selbsthalteventils 1 über den Kanal 82 über das Abschaltventil 153 in den Druckmitteltank entlüftet ist und der Ventilkolben 21 des Selbsthalteventils 1 bei ausreichend hohem Vorsteuerdruck P_VST1 im Druckraum 38 und/oder ausreichend hohem drehzahlabhängigen Druck P_D im Druckraum 39 entgegen der Rückstellfederkaft in umgeschobener Position gehalten wird und somit die Aktivierung der Notbetriebsfunktion möglich ist. Eine Deaktivierung der Notbetriebsfunktion erfolgt dadurch, dass der Vorsteuerdruck P_VST3 über die Schaltschwelle S2 gemäß Fig. 6 angehoben wird und dadurch der Ventilkolben 155 des Abschaltventils 153 über den stirnseitigen Druckraum 156 aus der Ruhelage heraus entgegen der Rückstellfederkraft umgeschoben und der im Druckraum 158 anliegende Vorsteuerdruck P_V2 über die Druckleitung 82 in den federseitigen Druckraum 71 des Selbsthalteventils 1 geleitet wird, wodurch der Ventilkolben 21 des Selbsthalteventils 1 entgegen dem evtl. im Druckraum 38 anliegenden Vorsteuerdruck P_VST1 und dem evtl. im Druckraum 39 anliegenden drehzahlabhängigen Druck P_D federunterstützt in seine Grundstellung zurückgeschoben und die Verbindung zwischen Aktivierungsdruck P_A im Druckraum 70 zur Druckleitung 14 Richtung Aktivierungsventil 2 unterbrochen wird.

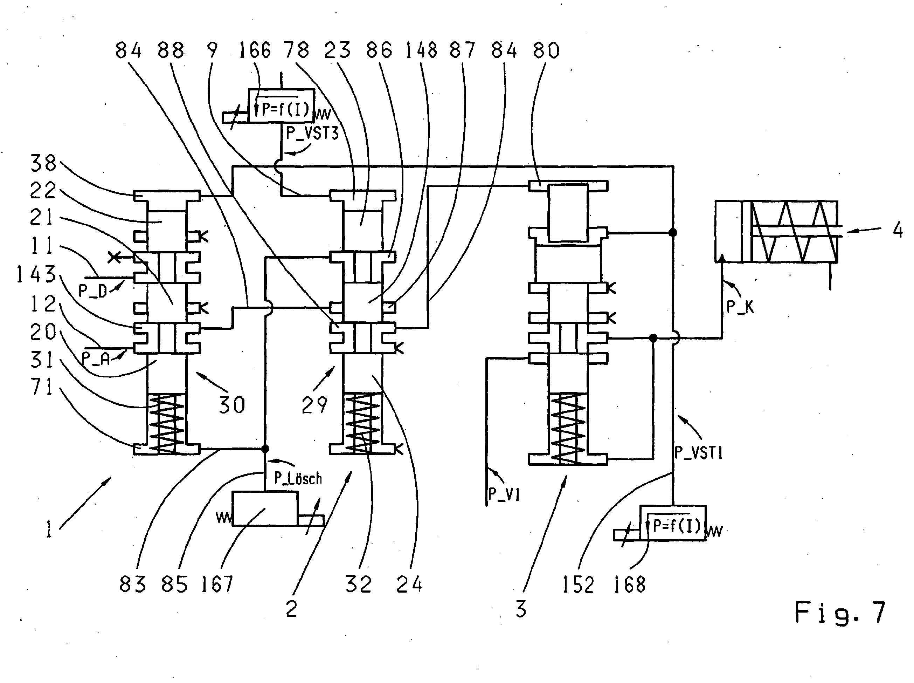

Schließlich zeigt Fig. 7 eine Steuerungsventilanordnung gemäß der Erfindung, bei der die beschriebene Notbetriebsfunktion dadurch nicht aktivierbar gemacht werden kann, indem das Selbsthalteventil 1 federraumseitig durch den Löschdruck P-Lösch druckbeaufschlagt in seine Grundstellung verschoben ist, und zugleich das Aktivierungsventil 2 entgegen der Federkraft seiner Rückstellfeder in einer Stellung gebracht ist, in der ein Steuerkolben des Aktivierungsventils 2 die Weiterleitung des Aktivierungsdrucks P_A unterbindet.

Hierzu ist gemäß Fig. 7 eine Steuerungsventilanordnung vorgesehen, die weitgehend derjenigen gemäß Fig. 1 gleicht, da das Aktivierungsventil 2 hierbei mit drei Steuerkolben 23, 24 und 148 ausgebildet ist. Zudem ist über eine Leitung 85 der Löschdruck P_Lösch zu dem rückstellfederseitigen Druckraum 71 des Selbsthalteventils 1 und über eine Leitung 85 zu dem Druckraum 86 des Aktivierungsventils 2 leitbar, der axial zwischen den beiden rücksteltfederfernen Steuerkolben 23 und 148 angeordnet ist. Der Aktivierungsdruck P_A ist von dem Selbsthalteventil 1 über eine Leitung 84 zu einem Druckraum 87 führbar, der durch den Steuerkolben 148 des Aktivierungsventils 2 absperrbar ist. Zwischen den Steuerkolben 148 und 24 ist ein Druckraum 88 am Aktivierungsventil 2 ausgebildet, welcher mit dem Druckraum 87 durch eine diesbezügliche Stellung des Steuerschiebers 29 verbindbar ist und so eine Weiterleitung des Aktivierungsdrucks P_A über eine Leitung 84 zu dem Druckraum 80 des Kupplungsregelventils 3 ermöglicht.

Um mit dieser Steuerungsventilanordnung gemäß Fig. 7 eine Aktivierung der Notbetriebsfunktion zu verhindern, wird bei Wegfall des Vorsteuerdrucks P_VST3 der Löschdruck P_Lösch sowohl auf den federseitigen Druckraum 71 des Selbsthalteventils 1 als auch in den Druckraum 86 des Aktivierungsventils 2 geleitet. Dadurch wird der Steuerschieber 30 des Selbsthalteventils 1 gegen einen gegebenenfalls ausreichend hohen drehzahlabhängigen Steuerdruck P_D in seine federentlastete Grundstellung verschoben. Zudem wird durch diesen Löschdruck P_Lösch im Druckraum 86 des Aktivierungsventils 2 dessen Steuerschieber 29 soweit gegen die Rückstellkraft der Rückstellfeder 32 verschoben, dass eine Weiterleitung von Aktivierungsdruck P_A über die Druckräume 87 und 88 von dem mittleren Steuerkolben 148 verhindert wird.

### Bezugszeichen

- 1: Selbsthalteventil
- 2: Aktivierungsventil
- 3: Kupplungsregelventil
- 4: Kupplungsbetätigungsvorrichtung
- 5: Zylinder
- 6: Kupplungskolben
- 7: Rückstellfeder
- 8: Leitung Vorsteuerdruck P_VST1
- 9: Leitung Vorsteuerdruck P_VST3
- 10: Leitung Vorsteuerdruck P_VST1
- 11: Leitung drehzahlabhängiger Druck P_D
- 12: Leitung Aktivierungsdruck P_A zum Selbsthalteventil
- 14: Verbindungsleitung Selbsthalteventil-Aktivierungsventil
- 15: Verbindungsleitung Aktivierungsventil-Kupplungsregelventil
- 16: Verbindungsleitung Kupplungsregelventil-Kupplungsbetätigungsvorrichtung
- 17: Verbindungsleitung Kupplungsregelventil-Kupplungsbetätigungsvorrichtung
- 18: Leitung Versorgungsdruck
- 19: Steuerschieber im Kupplungsregelventil
- 20: Steuerkolben am Steuerschieber im Selbsthalteventil
- 21: Steuerkolben am Steuerschieber im Selbsthalteventil
- 22: Steuerkolben am Steuerschieber im Selbsthalteventil
- 23: Steuerkolben am Steuerschieber im Aktivierungsventil
- 24: Steuerkolben am Steuerschieber im Aktivierungsventil
- 25: Steuerkolben am Steuerschieber im Kupplungsregelventil
- 26: Steuerkolben am Steuerschieber im Kupplungsregelventil
- 27: Steuerkolben am Steuerschieber im Kupplungsregelventil
- 28: Steuerkolben am Steuerschieber im Kupplungsregelventil
- 29: Steuerschieber im Aktivierungsventil
- 30: Steuerschieber im Selbsthalteventil
- 31: Rückstellfeder im Selbsthalteventil
- 32: Rückstellfeder im Aktivierungsventil
- 33: Rückstellfeder im Kupplungsregelventil
- 34: Kurzer Steuerschieber im Kupplungsregelventil
- 36: Ventilbohrung des Selbsthalteventils
- 38: Druckraum im Selbsthalteventil
- 39: Druckraum im Selbsthalteventil
- 63: Bohrung für Steuerschieber im Aktivierungsventil
- 64: Bohrung für langen Steuerschieber im Kupplungsregelventil
- 65: Bohrung für kurzen Steuerschieber im Kupplungsregelventil
- 70: Druckraum am Selbsthalteventil
- 71: Druckraum am Selbsthalteventil
- 72: Druckraum am Aktivierungsventil
- 73: Druckraum am Aktivierungsventil
- 74: Druckraum am Kupplungsregelventil
- 75: Druckraum am Kupplungsregelventil
- 76: Druckraum am Kupplungsregelventil
- 77: Druckraum am Kupplungsregelventil
- 78: Druckraum am Aktivierungsventil
- 80: Druckraum am Kupplungsregelventil
- 81: Leitung
- 82: Leitung
- 83: Leitung
- 84: Leitung
- 85: Leitung
- 86: Druckraum
- 87: Druckraum
- 88: Druckraum
- 89: Leitung
- 90: elektromagnetisch betätigbares Ventil
- 142: Rückstellfeder Abschaltventil
- 143: Druckraum am Selbsthalteventil
- 146: Leitung
- 147: Entleerbarer Druckraum am Selbsthalteventil
- 148: Steuerkolben am Selbsthalteventil
- 149: Druckraum Löschdruck führend
- 150: Leitung Löschdruck
- 152: Leitung P_VST1
- 153: Abschaltventil
- 154: Steuerkolben
- 155: Steuerkolben
- 156: Druckraum
- 157: Druckraum entleerbar
- 158: Druckraum
- 159: Steuerschieber Abschaltventil
- 160: Druckraum Abschaltventil
- 161: Leitung
- 162: Drossel
- 163: Rückschlagventil
- 164: Leitung
- 165: Druckmitteltank
- 166: elektromagnetisch betätigbares Ventil
- 167: elektromagnetisch betätigbares Ventil
- 168: elektromagnetisch betätigbares Ventil
- I_VST3: Steuerstrom für Ventil 166
- P_A: Aktivierungsdruck
- P_D: drehzahlabhängiger Steuerdruck
- P_K: Kupplungsbetätigungsdruck
- P_Lösch: Löschdruck
- P_V1: Versorgungsdruck
- P_V2: Vorsteuerdruck
- P_VST1: Vorsteuerdruck
- P_VST3: Vorsteuerdruck
- S1: Schaltpunkt Abschaltventil
- S2: Schaltpunkt Aktivierungsventil

## Patentansprüche

1. Steuerungsventilanordnung zur Betätigungssteuerung zumindest einer Anfahrkupplung eines Automatgetriebes eines Kraftfahrzeuges,
mit jeweils einem Kupplungsregelventil (3), über das ein Versorgungsdruck (P_V1) in einen Druckraum der jeweiligen Kupplungsbetätigungsvorrichtung (4) leitbar ist,
mit einem einen geregelten Vorsteuerdruck (P_VST3) erzeugenden Druckregelventil (166), welches von einem elektronischen Steuerungsgerät ansteuerbar ist und zumindest ein Steuerungsventil der Steuerungsventilanordnung mit dem Vorsteuerdruck (P_VST3) versorgt,
und mit einer Selbsthattehydraulik, mit deren Hilfe bei einem Ausfall der Steuerungselektronik und somit einem Wegfall des Vorsteuerdrucks (P_VST3) der vor dem Ausfall der Steuerungselektronik zuletzt vorliegende Schaltzustand der wenigstens einen Kupplungsbetätigungsvorrichtung (4) zumindest in manchen Betriebssituationen im Sinne einer Notbetriebsfunktion aufrechterhalten wird, wobei
die Selbsthaltehydraulik zur Realisierung der Notbetriebsfunktion ein Selbsthalteventil (1) und ein Aktivierungsventil (2) aufweist,
das Selbsthalteventil (1) so ausgebildet ist, dass es zur Weiterleitung eines Aktivierungsdrucks (P_A) in Abhängigkeit von einem motordrehzahlabhängigen Steuerdruck (P_D) zu dem Aktivierungsventil (2) geeignet ist,
das Aktivierungsventil (2) zur Weiterleitung des Aktivierungsdrucks (P_A) an das zumindest eine Kupplungsregelventil (3) in der Lage ist, und die Steuerungsventilanordnung mit Mitteln ausgestattet ist, mit denen in bestimmten Betriebssituationen ein Aktivieren der Notbetriebsfunktion trotz Wegfall des Vorsteuerdrucks (P_VST3) und Vorliegen eines zum Realisieren der Notbetriebsfunktion ausreichend hohen motordrehzahlabhängigen Steuerdrucks (P_D) verhinderbar ist, **dadurch gekennzeichnet, dass** eine bestimmte Betriebssituation eine solche ist, bei der das Kraftfahrzeug zunächst eine normalen Vorwärts- oder Rückwärtsfahrt mit geschlossener oder schlupfender Anfahrkupplung durchführte, dass das Kraftfahrzeug anschließend gestoppt wurde, und dass durch eine Getriebewählhebelbetätigung zur Wählhebelposition Neutral oder Parkstellung P die Anfahrkupplung bei eingelegtem Gang im Automatgetriebe geöffnet wurde.

2. Steuerungsventilanordnung nach Anspruch 1, **dadurch gekennzeichnet, dass** die Steuerungsventilanordnung so ausgebildet ist, dass beim Vorliegen der bestimmten Betriebssituation zur Verhinderung des Aktivierens der Notbetriebsfunktion eine Verbindung für den Aktivierungsdruck (P_A) zwischen dem Selbsthalteventil (1) und dem Aktivierungsventil (2) unterbrochen ist.

3. Steuerungsventilanordnung nach Anspruch 2, **dadurch gekennzeichnet, dass** das Aktivierungsventil (2) mit einem Löschdruck (P_Lösch) beaufschlagbar ist, der von diesem bei Wegfall des Vorsteuerdrucks (P_VST3) dem Selbsthalteventil (1) derart zuführbar ist, dass dieses die Weiterleitung des Aktivierungsdrucks (P_A) zu dem Aktivierungsventil (2) unterbricht.

4. Steuerungsventilanordnung nach Anspruch 3, **dadurch gekennzeichnet, dass** der Löschdruck (P_Lösch) einem Druckraum (71) des Selbsthalteventils (1) zuleitbar ist, der von einem Steuerkolben (20) axialverschiebbar begrenzt ist, mit dem die Weiterleitung des Aktivierungsdrucks (P_A) zwischen dem Selbsthalteventil (1) und dem Aktivierungsventil (2) unterbrechbar ist.

5. Steuerungsventilanordnung nach Anspruch 4, **dadurch gekennzeichnet, dass** der Druckraum (71) derjenige ist, in dem eine auf den Steuerkolben (20) wirkende Rückstellfeder (31) angeordnet ist.

6. Steuerungsventilanordnung nach einem der Ansprüche 1 oder 2, **dadurch gekennzeichnet, dass** ein Abschaltventil (153) vorhanden ist, mit dem das unter drehzahlabhängigen Steuerdruck (P_D) stehende Druckmittel dann in einen Druckmitteltank (165) ableitbar ist, wenn der Löschdruck (P_Lösch) auf das Abschaltventil (153) wirkt.

7. Steuerungsventilanordnung nach Anspruch 6, **dadurch gekennzeichnet, dass** der Löschdruck (P_Lösch) in den rückstellfederfernen Druckraum (156) des Abschaltventils (153) leitbar ist, wo dieser Löschdruck (P_Lösch) auf einen Steuerkolben (154) des Steuerschiebers (159) des Abschaltventils (153) wirkt, dass der drehzahlabhängige Steuerdruck (P_D) über eine Leitung (146) vom Selbsthalteventil (1) zu einem Druckraum (158) des Abschalteventils (153) geführt ist, und dass der Steuerschieber (159) einen Steuerkolben (155) aufweist, der bei Einwirkung des Löschdrucks (P_Lösch) auf den Steuerschieber (159) eine Verbindung zwischen einem entleerbarer Druckraum (157) des Abschalteventils (153) und dem von dem drehzahlabhängigen Druck beaufschlagten Druckraum (158) des Abschalteventils (153) freigibt.

8. Steuerungsventilanordnung nach Anspruch 7, **dadurch gekennzeichnet, dass** das Abschaltventil (153) einen Druckraum (160) aufweist, in dem eine auf den Steuerschieber (159) wirkende Rückstellfeder (142) angeordnet ist, dass der Druckraum (160) über eine Leitung (164) mit dem Druckmitteltank (165) verbunden ist, dass in der Leitung (164) ein in Richtung zum Abschaltventil (153) absperrend wirkendes Rückschlagventil (163) angeordnet ist, und dass in einer das Rückschlagventil (163) strömungstechnisch überbrückenden Leitung (161) eine Drossel (162) angeordnet ist.

9. Steuerungsventilanordnung nach wenigstens einem der Ansprüche 1 bis 8, **dadurch gekennzeichnet, dass** der rückstellfederferne Druckraum (38) des Selbsthalteventils (1) mit einem Vorsteuerdruck (P_VST1) beaufschlagbar ist, mit dem dessen Steuerschieber (30) nach einer Deaktivierung seiner Selbsthaltefunktion soweit gegen die Rückstellkraft der Rückstellfeder (31) auslenkbar ist, dass der drehzahlabhängige Steuerdruck (P_D) axial auf einen Steuerkolben (21) des Steuerschiebers (30) wirken kann.

10. Steuerungsventilanordnung nach wenigstens einem der Ansprüche 1 bis 9, **dadurch gekennzeichnet, dass** der rückstellfederfeme Druckraum (74) des wenigstens einen Kupplungsregelventils (3) mit dem Vorsteuerdruck (P_VST1) beaufschlagbar ist, mit dem dessen Steuerschieber (19) nach einer Deaktivierung der Selbsthaltefunktion des Selbsthalteventils (1) soweit gegen die Rückstellkraft einer auf den Steuerschieber (19) wirkenden Rückstellfeder (33) auslenkbar ist, dass ein zu dem Kupplungsregelventil (3) geführter Versorgungsdruck (P_V1) als Kupplungsbetätigungsdruck (P_K) zur zumindest einen Kupplungsbetätigungsvorrichtung (4) weiterleitbar ist.

11. Steuerungsventilanordnung nach wenigstens einem der Ansprüche 1 bis 10, **dadurch gekennzeichnet, dass** der Löschdruck (P_Lösch) zu dem rückstellfederfernen Druckraum (156) des Abschaltventils (153) führbar ist, und dass ein Vorsteuerdruck (P_V2) über eine Leitung (81) dem Druckraum (158) des Abschalteventils (153) und von dort, absperrbar durch den Steuerschieber (159) des Abschaltventils (153), über eine Leitung (82) dem rückstellfederseitigen Druckraum (71) des Selbsthalteventils (1) zuführbar ist.

12. Steueruhgsventilanordnung nach wenigstens einem der Ansprüche 1 bis 10, **dadurch gekennzeichnet, dass** zu dem rückstellfederfernen Druckraum (156) des Abschaltventils (153) der Vorsteuerdruck (P-VST3) leitbar ist, und dass der Vorsteuerdruck (P_V2) über die Leitung (81) dem Druckraum (158) des Abschalteventils (153) und von dort, absperrbar durch den Steuerschieber (159) des Abschaltventils (153), über eine Leitung (82) zu dem rückstellfederseitigen Druckraum (71) des Selbsthalteventils (1) zuführbar ist.

13. Steuerungsventilanordnung nach wenigstens einem der Ansprüche 1 bis 10, **dadurch gekennzeichnet, dass** der Löschdruck (P_Lösch) über eine Leitung (83) dem rückstellfederseitigem Druckraum (71) des Selbsthalteventils (1) und über eine Leitung (85) einem Druckraum (86) des Aktivierungsventils (2) zuführbar ist, wobei letzterer im Bereich der rückstellfederfernen Stirnseite des mittleren Steuerkolbens (148) eines dreikolbigen Steuerschiebers (29) des Aktivierungsventils (2) ausgebildet ist, dass der Aktivierungsdruck (P_A) von dem Druckraum (143) des Selbsthalteventils (1) über eine Leitung (84) zu einem Druckraum (87) des Aktivierungsventils (2) leitbar ist, dass benachbart zu dem Druckraum (87) ein weiterer Druckraum (88) am Aktivierungsventil (2) ausgebildet ist, der mit einer zu dem Druckraum (80) des Kupplungsregelventils (3) führenden Aktivierungsdruckleitung (84) verbunden ist, und dass mit dem mittleren Steuerkolben (148) des Steuerschiebers (29) des Aktivierungsventils (2) eine Verbindung zwischen dem Druckraum (87) und dem Druckraum (88) absperrbar ist.

14. Steuerungsventilanordnung nach wenigstens einem der Ansprüche 1 bis 13, **dadurch gekennzeichnet, dass** der Aktivierungsdruck (P_A) zuerst auf das Aktivierungsventil (2) und von dort über das Selbsthalteventil (1), oder umgekehrt, an das zumindest eine Kupplungsregelventil (3) weiterleitbar ist.

## Claims

1. Control valve arrangement for the actuating control of at least one starting clutch of an automatic transmission of a motor vehicle,
with in each case a clutch-regulating valve (3), via which a supply pressure (P _V1) can be conducted into a pressure space of the respective clutch actuation device (4),
with a pressure-regulating valve (166) which generates a regulated pilot control pressure (P_VST3) and which can be activated by an electronic control apparatus and supplies at least one control valve of the control valve arrangement with the pilot control pressure (P_VST3),
and with self-holding hydraulics, with the aid of which, in the event of a failure of the control electronics and therefore a lapse of the pilot control pressure (P_VST3), the switched state, last present before the failure of the control electronics, of the at least one clutch actuation device (4) is maintained, at least in some operating situations, with the effect of an emergency operating function,
the self-holding hydraulics having a self-holding valve (1) and an activating valve (2) for implementing the emergency operating function,
the self-holding valve (1) being designed so that it is suitable for transferring an activating pressure (P_A) to the activating valve (2) as a function of an engine rotational speed-dependent control pressure (P_D),
the activating valve (2) being capable of transferring the activating pressure (P_A) to the at least one clutch-regulating valve (3), and the control valve arrangement being equipped with means by which, in specific operating situations, an activation of the emergency operating function can be prevented in spite of the lapse of the pilot control pressure (P_VST3) and the presence of an engine rotational speed-dependent control pressure (P_D) sufficiently high for implementing the emergency operating function, **characterized in that** a specific operating situation is one in which the motor vehicle first carried out normal forward or reverse drive with a closed or slipping starting clutch, **in that** the motor vehicle was subsequently stopped, and **in that** the starting clutch was opened, with a gear selected in the automatic transmission, by means of the actuation of a transmission selector lever into the selector-lever position neutral or parking position P.

2. Control valve arrangement according to Claim 1, **characterized in that** the control valve arrangement is designed so that, in the presence of the specific operating situation, a connection for the activating pressure (P_A) between the self-holding valve (1) and the activating valve (2) is broken in order to prevent the activation of the emergency operating function.

3. Control valve arrangement according to Claim 2, **characterized in that** the activating valve (2) can be loaded with a cancellation pressure (P_Lösch) which can be supplied via this, in the event of a lapse of the pilot control pressure (P_VST3), to the self-holding valve (1), in such a way that the latter interrupts the transfer of the activating pressure (P_A) to the activating valve (2).

4. Control valve arrangement according to Claim 3, **characterized in that** the cancellation pressure (P_Lösch) can be delivered to a pressure space (71) of the self-holding valve (1), which pressure space is delimited axially displaceably by a control piston (20), by means of which the transfer of the activating pressure (P_A) between the self-holding valve (1) and the activating valve (2) can be interrupted.

5. Control valve arrangement according to Claim 4, **characterized in that** the pressure space (71) is that in which a restoring spring (31) acting on the control piston (20) is arranged.

6. Control valve arrangement according to either one of Claims 1 and 2, **characterized in that** a cut-off valve (153) is present, by means of which the pressure medium which is under rotational speed-dependent control pressure (P_D) can then be diverted into a pressure-medium tank (165) when the cancellation pressure (P_Lösch) acts on the cut-off valve (153).

7. Control valve arrangement according to Claim 6, **characterized in that** the cancellation pressure (P_Lösch) can be conducted into the restoring spring-remote pressure space (156) of the cut-off valve (153), where this cancellation pressure (P_Lösch) acts on a control piston (154) of the control slide (159) of the cut-off valve (153), **in that** the rotational speed-dependent control pressure (P_D) is routed via a line (146) from the self-holding valve (1) to a pressure space (158) of the cut-off valve (153), and **in that** the control slide (159) has a control piston (155) which, when the cancellation pressure (P_Lösch) acts on the control slide (159), opens a connection between an emptyable pressure space (157) of the cut-off valve (153) and the pressure space (158), loaded by the rotational speed-dependent pressure, of the cut-off valve (153).

8. Control valve arrangement according to Claim 7, **characterized in that** the cut-off valve (153) has a pressure space (160) in which a restoring spring (142) acting on the control slide (159) is arranged, **in that** the pressure space (160) is connected via a line (164) to the pressure-medium tank (165), **in that** a non-return valve (163) acting so as to shut off in the direction of the cut-off valve (153) is arranged in the line (164), and **in that** a throttle (162) is arranged in a line (161) flow-bridging the non-return valve (163).

9. Control valve arrangement according to at least one of Claims 1 to 8, **characterized in that** the restoring spring-remote pressure space (38) of the self-holding valve (1) can be loaded with a pilot control pressure (P_VST1), by means of which its control slide (30), after a deactivation of its self-holding function, can be deflected counter to the restoring force of the restoring spring (31) to an extent such that the rotational speed-dependent control pressure (P_D) can act axially on a control piston (21) of the control slide (30).

10. Control valve arrangement according to at least one of Claims 1 to 9, **characterized in that** the restoring spring-remote pressure space (74) of the at least one clutch-regulating valve (3) can be loaded with the pilot control pressure (P_VST1), by means of which its control slide (19), after a deactivation of the self-holding function of the self-holding valve (1), can be deflected counter to the restoring force of a restoring spring (33) acting on the control slide (19), to an extent such that a supply pressure (P_V1) routed to the clutch-regulating valve (3) can be transferred as a clutch actuation pressure (P_K) to the at least one clutch actuation device (4).

11. Control valve arrangement according to at least one of Claims 1 to 10, **characterized in that** the cancellation pressure (P_Lösch) can be routed to the restoring spring-remote pressure space (156) of the cut-off valve (153), and **in that** a pilot control pressure (P_V2) can be supplied via a line (81) to the pressure space (158) of the cut-off valve (153) and from there can be supplied so as to be capable of being shut off by the control slide (159) of the cut-off valve (153), via a line (82) to the restoring spring-side pressure space (71) of the self-holding valve (1).

12. Control valve arrangement according to at least one of Claims 1 to 10, **characterized in that** the pilot control pressure (P_VST3) can be conducted to the restoring spring-remote pressure space (156) of the cut-off valve (153), and **in that** the pilot control pressure (P_V2) can be supplied via the line (81) to the pressure space (158) of the cut-off valve (153) and from there can be supplied so as to be capable of being shut off by the control slide (159) of the cut-off valve (153), via a line (82) to the restoring spring-side pressure space (71) of the self-holding valve (1).

13. Control valve arrangement according to at least one of Claims 1 to 10, **characterized in that** the cancellation pressure (P_Lösch) can be supplied via a line (83) to the restoring spring-side pressure space (71) of the self-holding valve (1) and via a line (85) to a pressure space (86) of the activating valve (2), the latter being formed in the region of the restoring spring-remote end face of the middle control piston (148) of a three-piston control slide (29) of the activating valve (2), **in that** the activating pressure (P_A) can be conducted from the pressure space (143) of the self-holding valve (1) via a line (84) to a pressure space (87) of the activating valve (2), **in that** a further pressure space (88) is formed on the activating valve (2) adjacently to the pressure space (87) and is connected to an activating-pressure line (84) leading to the pressure space (80) of the clutch-regulating valve (3), and **in that** a connection between the pressure space (87) and the pressure space (88) can be shut off by means of the middle control piston (148) of the control slide (29) of the activating valve (2).

14. Control valve arrangement according to at least one of Claims 1 to 13, **characterized in that** the activating pressure (P_A) can be transferred first to the activating valve (2) and from there via the self-holding valve (1), or vice versa, to the at least one clutch-regulating valve (3).

## Revendications

1. Agencement de soupapes de commande pour la commande d'actionnement d'au moins un embrayage de démarrage d'une boîte de vitesses automatique d'un véhicule automobile, avec à chaque fois une soupape de régulation d'embrayage (3), par le biais de laquelle une pression d'alimentation (P_V1) peut être transmise dans un espace de pression du dispositif d'actionnement d'embrayage respectif (4),
avec une soupape de régulation de la pression (166) produisant une pression pilote régulée (P_VST3), qui peut être commandée par un appareil de commande électronique et qui alimente au moins une soupape de commande de l'agencement de soupapes de commande avec la pression pilote (P_VST3),
et avec un système hydraulique de maintien à l'aide duquel, en cas de panne de l'électronique de commande et donc en cas de défaillance de la pression pilote (P_VST3) le dernier état de commutation de l'au moins un dispositif d'actionnement d'embrayage (4) existant avant la panne de l'électronique de commande est maintenu au moins dans certaines situations de fonctionnement en tant que mode de fonctionnement de secours,
le système hydraulique de maintien présentant, pour mettre en oeuvre le mode de fonctionnement de secours, une soupape de maintien (1) et une soupape d'activation (2),
la soupape de maintien (1) étant réalisée de telle sorte qu'elle soit appropriée pour transmettre une pression d'activation (P_A) en fonction d'une pression de commande (P_D) dépendant du régime du moteur à la soupape d'activation (2),
la soupape d'activation (2) étant en mesure de transmettre la pression d'activation (P_A) à l'au moins une soupape de régulation d'embrayage (3), et l'agencement de soupapes de commande étant muni de moyens avec lesquels, dans certaines situations de fonctionnement, une activation du mode de fonctionnement de secours peut être évitée malgré la défaillance de la pression pilote (P_VST3) et en présence d'une pression de commande (P_D) dépendant du régime du moteur suffisamment élevée pour mettre en oeuvre le mode de fonctionnement de secours, **caractérisé en ce qu'**une situation de fonctionnement particulière est une situation dans laquelle le véhicule automobile a effectué d'abord une conduite normale en marche avant ou en marche arrière avec un embrayage de démarrage fermé ou glissant, que le véhicule automobile a ensuite été arrêté, et que l'embrayage de démarrage à été ouvert avec une vitesse enclenchée dans la boîte de vitesses automatique par un actionnement d'un levier de sélection de vitesses dans la position du levier de sélection neutre ou de stationnement P.

2. Agencement de soupapes de commande selon la revendication 1, **caractérisé en ce que** l'agencement de soupapes de commande est réalisé de telle sorte qu'en présence de la situation de fonctionnement particulière, pour éviter d'activer le mode de fonctionnement de secours, une connexion pour la pression d'activation (P_A) entre la soupape de maintien (1) et la soupape d'activation (2) est interrompue.

3. Agencement de soupapes de commande selon la revendication 2, **caractérisé en ce que** la soupape d'activation (2) peut être sollicitée avec une pression d'extinction (P_Lösch), qui peut être transmise par celle-ci en cas de défaillance de la pression pilote (P_VST3) à la soupape de maintien (1) de telle sorte que celle-ci interrompe la transmission de la pression d'activation (P_A) à la soupape d'activation (2).

4. Agencement de soupapes de commande selon la revendication 3, **caractérisé en ce que** la pression d'extinction (P_Lösch) peut être transmise à un espace de pression (71) de la soupape de maintien (1), lequel est limité de manière déplaçable axialement par un piston de commande (20), avec lequel la transmission de la pression d'activation (P_A) entre la soupape de maintien (1) et la soupape d'activation (2) peut être interrompue.

5. Agencement de soupapes de commande selon la revendication 4, **caractérisé en ce que** l'espace de pression (71) est celui dans lequel est disposé un ressort de rappel (31) agissant sur le piston de commande (20).

6. Agencement de soupapes de commande selon l'une quelconque des revendications 1 ou 2, **caractérisé en ce que** l'on prévoit une soupape de coupure (153), avec laquelle le moyen de pression soumis à la pression de commande (P_D) dépendant du régime peut alors être évacué dans un réservoir de moyen de pression (165), quand la pression d'extinction (P_Lösch) agit sur la soupape de coupure (153).

7. Agencement de soupapes de commande selon la revendication 6, **caractérisé en ce que** la pression d'extinction (P_Lösch) peut être transmise dans l'espace de pression (156), éloigné du ressort de rappel, de la soupape de coupure (153), dans lequel cette pression d'extinction (P_Lösch) agit sur un piston de commande (154) du coulisseau de commande (159) de la soupape de coupure (153), **en ce que** la pression de commande (P_D) dépendant du régime est guidée par le biais d'une conduite (146) de la soupape de maintien (1) à un espace de pression (158) de la soupape de coupure (153), et **en ce que** le coulisseau de commande (159) présente un piston de commande (155), qui, lors de l'action de la pression d'extinction (P_Lösch) sur le coulisseau de commande (159), libère une connexion entre un espace de pression (157) vidangeable de la soupape de coupure (153) et l'espace de pression (158) de la soupape de coupure (153) sollicité par la pression dépendant du régime.

8. Agencement de soupapes de commande selon la revendication 7, **caractérisé en ce que** la soupape de coupure (153) présente un espace de pression (160) dans lequel est disposé un ressort de rappel (142) agissant sur le coulisseau de commande (159), **en ce que** l'espace de pression (160) est connecté par le biais d'une conduite (164) au réservoir de fluide de pression (165), **en ce que** dans la conduite (164) est disposée une soupape de non retour (163) agissant de manière bloquante dans la direction de la soupape de coupure (153), et **en ce qu'**un étranglement (162) est disposé dans une conduite (161) surmontant, par une technique d'écoulément, la soupape de non retour (163).

9. Agencement de soupapes de commande selon au moins l'une quelconque des revendications 1 à 8, **caractérisé en ce que** l'espace de pression (38), éloigné du ressort de rappel, de la soupape de maintien (1) peut être sollicité avec une pression pilote (P_VST1), avec laquelle son coulisseau de commande (30), après une désactivation de sa fonction de maintien, peut être dévié à l'encontre de la force de rappel du ressort de rappel (31) dans une mesure telle que la pression de commande (P_D) dépendant du régime puisse agir axialement sur un piston de commande (21) du coulisseau de commande (30).

10. Agencement de soupapes de commande selon au moins l'une quelconque des revendications 1 à 9, **caractérisé en ce que** l'espace de commande (74), éloigné du ressort de rappel, de l'au moins une soupape de régulation d'embrayage (3), peut être sollicité avec la pression pilote (P_VST1), avec laquelle son coulisseau de commande (19) peut être dévié, après une désactivation de la fonction de maintien de la soupape de maintien (1) à l'encontre de la force de rappel d'un ressort de rappel (33) agissant sur le coulisseau de commande (19), dans une mesure telle qu'une pression d'alimentation (P_V1) transmise à la soupape de régulation d'embrayage (3) puisse être transmise en tant que pression d'actionnement d'embrayage (P_K) à au moins un dispositif d'actionnement d'embrayage (4).

11. Agencement de soupapes de commande selon au moins l'une quelconque des revendications 1 à 10, **caractérisé en ce que** la pression d'extinction (P_Lösch) peut être transmise à l'espace de pression (156), éloigné du ressort de rappel, de la soupape de coupure (153), et **en ce qu'**une pression pilote (P_V2) peut être transmise par le biais d'une conduite (81) à l'espace de pression (158) de la soupape de coupure (153) et de là, de manière blocable par le coulisseau de commande (159) de la soupape de coupure (153), par le biais d'une conduite (82) à l'espace de pression (71), du côté du ressort de rappel, de la soupape de maintien (1).

12. Agencement de soupapes de commande selon au moins l'une quelconque des revendications 1 à 10, **caractérisé en ce que** la pression pilote (P_VST3) peut être transmise à l'espace de pression (156), éloigné du ressort de rappel, de la soupape de coupure (153), et **en ce que** la pression pilote (P_V2) peut être acheminée par le biais de la conduite (81) à l'espace de pression (158) de la soupape de coupure (153) et de là, de manière blocable par le coulisseau de commande (159) de la soupape de coupure (153), par le biais d'une conduite (82) à l'espace de pression (71), du côté du ressort de rappel, de la soupape de maintien (1).

13. Agencement de soupapes de commande selon au moins l'une quelconque des revendications 1 à 10, **caractérisé en ce que** la pression d'extinction (P_Lösch) peut être acheminée par le biais d'une conduite (83) à l'espace de pression (71), du côté du ressort de rappel, de la soupape de maintien (1), et par le biais d'une conduite (85), à un espace de pression (86) de la soupape d'activation (2), cette dernière étant réalisée dans la région du côté frontal du piston de commande central (148), éloigné du ressort de rappel, d'un coulisseau de commande (29) à trois pistons de la soupape d'activation (2), **en ce que** la pression d'activation (P_A) peut être transmise de l'espace de pression (143) de la soupape de maintien (1) par le biais d'une conduite (84) à un espace de pression (87) de la soupape d'activation (2), **en ce qu'**à côté de l'espace de pression (87), est réalisé un autre espace de pression (88) sur la soupape d'activation (2), lequel est connecté à une conduite de pression d'activation (84) conduisant à l'espace de pression (80) de la soupape de régulation d'embrayage (3), et **en ce qu'**une connexion entre l'espace de pression (87) et l'espace de pression (88) peut être bloquée avec le piston de commande central (148) du coulisseau de commande (29) de la soupape d'activation (2).

14. Agencement de soupapes de commande selon au moins l'une quelconque des revendications 1 à 13, **caractérisé en ce que** la pression d'activation (P_A) peut d'abord être transmise à la soupape d'activation (2) et de là par le biais de la soupape de maintien (1) ou inversement, à l'au moins une soupape de régulation d'embrayage (3).
